Europäisches Patentamt

European Patent Office

Office européen des brevets

(11) Numéro de publication : **0 287 415 B1**

# FASCICULE DE BREVET EUROPEEN

(45) Date de publication du fascicule du brevet :
**15.01.92 Bulletin 92/03**

(51) Int. Cl.⁵ : **H04J 14/00**

(21) Numéro de dépôt : **88400728.7**

(22) Date de dépôt : **24.03.88**

(54) **Dispositif de transmission par fibres optiques, en particulier en milieu sous-marin.**

(30) Priorité : **14.04.87 FR 8705306**

(43) Date de publication de la demande :
**19.10.88 Bulletin 88/42**

(45) Mention de la délivrance du brevet :
**15.01.92 Bulletin 92/03**

(84) Etats contractants désignés :
**DE GB IT NL**

(56) Documents cités :
**EP-A- 0 190 662**
**DE-A- 3 317 541**
**FR-A- 2 373 923**
**IBM TECHNICAL DISCLOSURE BULLETIN,**
**vol. 22, no. 8B, janvier 1980, pages 3815,3816,**
**New York, US; F. GFELLER et al.: "Local area**
**fiber-optic broadcast network"**

(56) Documents cités :
**BRITISH TELECOMMUNICATIOSN ENGINEE-**
**RING, vol. 5, no. 2, juillet 1986, pages 177-182,**
**Londres, GB; J.M. HORNE et al.: "Network**
**planning: The new opportunities created by**
**submarine optical-fibre systems"**
**PATENT ABSTRACTS OF JAPAN, vol. 8, n. 285**
**(E-287)[1722], 26 décembre 1984, page 91 E**
**287; & JP-A-59 151 543**

(73) Titulaire : **ETAT FRANCAIS représenté par le**
**Ministre Délégué des Postes et**
**Télécommunications**
**(CENTRE NATIONAL D'ETUDES DES**
**TELECOMMUNICATIONS) 38-40 rue du**
**Général Leclerc**
**F-92131 Issy-les-Moulineaux (FR)**

(72) Inventeur : **Thiennot, Jean**
**9, Allée de la Nattée Chevry**
**F-91190 Gif Sur Yvette (FR)**

(74) Mandataire : **Plaçais, Jean-Yves et al**
**Cabinet Netter, 40, rue Vignon**
**F-75009 Paris (FR)**

## Description

L'invention concerne les transmissions par fibres optiques, principalement, mais non limitativement, en milieu sous-marin.

Les différentes fibres optiques contenues dans un même câble sous-marin n'ont pas nécessairement toutes le même point de départ, ni le même point d'arrivée. On prévoit donc des "unités de dérivation", immergées, raccordant plusieurs câbles, pour réaliser un réseau sous-marin définissant les liaisons point à point désirées.

Une telle unité de dérivation immergée peut, de plus, contenir :

— des régénérateurs opto-électroniques pour amplifier les signaux optiques transitant dans les fibres ;

— des dispositifs de télésurveillance des régénérateurs, permettant de localiser d'éventuels défauts ;

— des dispositifs de commutation télécommandée, agissant soit au niveau optique, entre fibres, soit au niveau électrique, entre régénérateurs, par exemple pour dérouter les signaux si leur voie normale est en panne.

Tout cela suppose une alimentation électrique, qui accompagne les câbles optiques.

On y ajoute des dispositifs de commutation électrique télécommandée, permettant de modifier la configuration du circuit de télé-alimentation, en cas de coupure locale intempestive de celui-ci.

Cet ensemble de dispositions va être utilisé pour la liaison transatlantique dite TAT8, dont la pose est prévue en 1988.

Quoique les solutions connues soient d'une fiabilité suffisante, elles ne donnent pas entière satisfaction dans toutes les configurations. En effet, pour optimiser l'utilisation de chaque fibre optique, il est souhaitable de réaliser un "multiplexage immergé", permettant de répartir entre plusieurs destinations le trafic acheminé par une fibre optique incidente, et réciproquement.

Un tel multiplexage peut être synchrone. Dans ce cas, le signal transmis possède un haut débit, calé sur une cadence d'horloge unique, définie par une horloge mère. Il est muni d'une structure de trame appropriée, et, éventuellement, d'un code en ligne adapté à la transmission au travers des régénérateurs, ou destiné à faciliter la télésurveillance de ces derniers.

La trame et le code en ligne peuvent être introduits dans le signal au niveau des stations d'émission terrestres. En bref, celles-ci vont recevoir N affluents numériques plésiochrones, les rendre synchrones par addition d'un nombre adéquat d'éléments binaires, puis les combiner, avec la structure de trame (et le code en ligne éventuel) afin d'obtenir le signal à haut débit qu'il faut transmettre. Ce dernier sera constitué d'une suite de "segments" correspondant à chacun des affluents, et comprendra des éléments de synchronisation permettant d'identifier ces segments.

Les opérations de multiplexage immergé peuvent se faire au niveau électrique dans des unités de dérivation modifiées.

Dans un schéma "parallèle", chaque fibre incidente est raccordée à un démultiplexeur à N sorties ; chaque fibre sortante est connectée derrière un multiplexeur à N entrées ; une matrice (fixe ou reconfigurable) définit la loi de transfert entre les N sorties du démultiplexeur et les N entrées du multiplexeur.

Un autre schéma, que l'on appellera "série", utilise comme élément de base un commutateur d'extraction-insertion ("drop and insert switch"). Celui-ci extrait du signal à haut débit tous les segments correspondant à un affluent particulier, et les remplace par les segments issus d'un autre affluent. Une ou des mémoires de stockage intermédiaire sont à prévoir. Enfin, l'équipement complet devrait comprendre, outre le nombre voulu de commutateurs d'extraction-insertion pour établir tous les échanges d'affluents de base (jusqu'à N par paire de fibres), une matrice de répartition pour définir exactement ces échanges.

Que l'on utilise l'un ou l'autre des schémas, l'unité de dérivation obtenue serait complexe. En plus de la complexité résultant des équipements de multiplexage immergés eux-mêmes, il faut prévoir des régénérateurs, le dispositif de télésurveillance associé à ceux-ci, les commutateurs électriques de télé-alimentation (difficilement implantables ailleurs). Il s'y ajoute des dispositifs de télécommande et de télésurveillance nouveaux, pour l'équipement de multiplexage immergé lui-même. Tout cela doit être prévu avec la redondance requise au milieu immergé. Enfin, il faut prévoir un dispositif permettant de contourner l'équipement de multiplexage immergé, s'il est défaillant, pour maintenir le trafic.

Tout cela pose un grave problème, pour des raisons techniques et économiques.

Techniquement, l'ensemble est difficile à concevoir et à réaliser sous la forme d'un boîtier restant manipulable en mer, compte tenu des risques d'interférence entre sous-ensembles, aggravés par le débit élevé et des problèmes d'échauffement et de dissipation d'énergie. On notera aussi l'existence de différences de potentiel importantes entre sous-ensembles, car on alimente un grand nombre de circuits à partir d'un courant de télé-alimentation limité, et l'architecture du système de télé-alimentation requiert des isolations diélectriques importantes, peu compatibles avec l'obtention d'une faible impédance thermique.

Economiquement, un tel dispositif devrait être conçu, cas par cas, pour chaque application. Une économie d'échelle ne peut être attendue que pour les composants de base, mais en aucun cas pour le dispositif complet, et ce, depuis le stade des études jusqu'à celui des stocks nécessaires à la maintenance.

La présente invention vient apporter une solution à ce problème.

L'invention concerne donc un dispositif de transmission par câble à fibres optiques, en particulier en milieu sous-marin.

Elle utilise des modules d'échange réalisés dans le principe à l'aide de commutateurs d'extraction-insertion, et constituant des organes électriques de transfert de données entre fibres, propres à extraire de la trame du signal utile les segments relatifs à un premier groupe de signaux affluents, pour les remplacer par des segments relatifs à un second groupe de signaux affluents.

Le dispositif selon l'invention comporte des modules répéteurs-échangeurs disposés au long d'un câble à plusieurs fibres, et comprenant chacun au moins un module d'échange réalisé avantageusement par une paire de commutateurs d'extraction-insertion associés à des moyens de synchronisation, et propre à effectuer un échange de segments de trame entre au moins deux fibres choisies dudit câble, ainsi que des moyens régénérateurs pour l'ensemble des fibres de ce câble et pour assurer les autres fonctions courantes du répéteur, le tout enfermé dans un boîtier analogue à celui du répéteur, ce qui permet de répartir la fonction de "multiplexage immergé" ou encore l'orientation du trafic sur un groupe de tels répéteurs-échangeurs.

Les deux fibres sujettes à échange peuvent être de même sens, ou bien de sens différent.

De préférence, le module d'échange ou les deux commutateurs d'extraction-insertion sont au repos tant que leur synchronisation n'a pu être établie.

Avantageusement, le module d'échange ou les deux commutateurs d'extraction-insertion sont court-circuitables sur commande par des chemins parallèles directs.

Il est également intéressant de prévoir un autre module d'échange ou deux autres commutateurs d'extraction-insertion montés, commutables, en redondance sur les premiers, pour les mêmes fibres.

Un autre aspect de l'invention concerne un répéteur-échangeur, équipé d'au moins une paire de fibres redondantes, agencé pour permettre un déroutage des signaux transitant sur certaines au moins des autres fibres par lesdites fibres redondantes, en particulier à l'aide d'une matrice de déroutage. Dans un tel répéteur-échangeur, les entrées-sorties de l'un des modules d'échange ou de l'une des paires de commutateurs d'extraction-insertion sont commutables sur une fibre redondante de même sens.

D'autres aspects de l'invention concernent la synchronisation. Celle-ci peut se faire à l'aide d'au moins une unité de dérivation propre à dupliquer le signal incident vers deux stations différentes, qui reçoivent alors toutes deux la même fréquence d'horloge.

Pour préserver le secret des communications, il est avantageux de prévoir, au voisinage de l'unité de dérivation, au moins un module répéteur-échangeur, pour extraire les messages ne concernant pas la station de destination, et les remplacer par un pur signal de rythme.

Une variante tendant au même but consiste en ce que le signal provenant d'une station est, après stockage, renvoyé à cette station à une fréquence d'horloge tirée d'une autre station.

Dans ce cas, il est avantageux que le renvoi à la même station soit effectué après passage dans des modules répéteurs-échangeurs qui assurent des échanges de messages avec deux autres stations.

Au niveau des stations d'émission, il est fréquent de multiplexer une pluralité d'affluents numériques plésiochrones, c'est-à-dire dont les cadences d'horloge sont voisines, mais non synchrones. Leur débit numérique d (34 Mbit/s par exemple) est de préférence au bas niveau d'une hiérarchie numérique normalisée de débits, dont le sommet D est le haut débit de transmission sur les fibres (560 Mbit/s par exemple). Lors du multiplexage, on ajoute si nécessaire aux affluents des éléments binaires, en nombre suffisant pour les rendre synchrones, comme déjà indiqué. Ici, la structure de trame à haut débit se décompose directement en des affluents au bas niveau.

Cependant, on peut prévoir que la structure de trame comporte des segments à un niveau intermédiaire de débit d' (140 Mbits/s par exemple).

En ce cas, des modules d'échange ou des commutateurs d'extraction-insertion vont opérer sur ces segments de données relatifs à un débit de transmission intermédiaire entre le haut débit et le débit de base des affluents numériques.

Ces mêmes modules d'échange ou commutateurs d'extraction-insertion opérant à débit intermédiaire peuvent être doublés par un autre module d'échange ou une autre paire de commutateurs d'extraction-insertion opérant au débit de base.

Selon un autre aspect de l'invention, le dispositif comporte, au voisinage d'une unité de dérivation d'atterrissement, côté mer, un tronçon de fibre et une fibre intercontinentale respectivement reliées par l'unité de dérivation à deux stations terrestres différentes, ainsi qu'au moins un module répéteur-échangeur monté entre le tronçon de fibre et la fibre intercontinentale.

Dans le même esprit, le dispositif peut comprendre au moins une unité de dérivation propre à dupliquer le signal incident vers deux stations différentes qui reçoivent alors toutes deux la même fréquence d'horloge.

Pour préserver le secret des communications, il est prévu, au voisinage de l'unité de dérivation, au moins un module répéteur-échangeur, pour extraire les messages ne concernant pas la station de destination, et les remplacer par un pur signal de rythme.

En variante, le signal provenant d'une station est, après stockage, renvoyé à cette station à une fréquence d'horloge tirée d'une autre station.

Mieux, ce renvoi à la même station peut être effectué après passage dans des modules répéteurs-échangeurs qui assurent des échanges de messages avec deux autres stations.

D'autres caractéristiques et avantages de l'invention apparaîtront à l'examen de la description détaillée ci-après, et des dessins annexés, sur lesquels :

— la figure 1 illustre le schéma de principe d'un commutateur d'extraction-insertion utilisé pour l'invention ; tandis que la figure 1A définit une représentation symbolique d'un tel commutateur qui sera utilisé dans les autres figures ;

— la figure 2 est le schéma de principe du module d'échange inclus dans un répéteur-échangeur selon l'invention, dans le cas où les deux fibres intéressées sont de sens opposé, tandis que les figures 2A et 2B donnent respectivement une représentation symbolique d'un tel répéteur-échangeur, respectivement dans le cas où les deux fibres sont de sens opposé et dans celui où elles sont de même sens ;

— les figures 3A et 3B montrent deux variantes de modules d'échange inclus dans un répéteur-échangeur, dans le cas où intervient un débit de données à cadence intermédiaire ;

— la figure 4 montre un premier mode de réalisation de répéteur-échangeur selon l'invention ;

— la figure 5 montre un autre mode de réalisation de répéteur-échangeur selon l'invention ;

— la figure 6 montre un troisième mode de réalisation de répéteur-échangeur selon l'invention ;

— la figure 7 montre un quatrième mode de réalisation de répéteur-échangeur selon l'invention, où celui-ci est incorporé à un dispositif comportant une matrice de commutation de reroutage, avec usage d'au moins une paire de fibres utilisées en redondance ;

— la figure 8 illustre une première manière de synchroniser le dispositif selon l'invention ;

— la figure 9 illustre une seconde manière de synchroniser un dispositif selon l'invention, avec des moyens de sécurité pour assurer la transmission en cas de panne ;

— la figure 10 illustre une autre manière d'assurer la synchronisation et la sécurité en cas de panne ;

— la figure 11 illustre encore une autre manière d'assurer la synchronisation et la sécurité ;

— la figure 12 illustre un exemple de réalisation d'un réseau de transmission à l'aide des moyens selon l'invention ;

— la figure 13 illustre schématiquement un autre réseau mettant en oeuvre l'invention ;

— les figures 14A et 14B montrent deux manières d'assurer les échanges de signaux et le passage de l'information d'horloge entre deux stations ;

— la figure 15 illustre une façon de dupliquer un signal vers deux fibres optiques aval, tandis que la figure 15A en donne une illustration symbolique utilisée dans les autres dessins ;

— la figure 16A illustre une variante de la figure 15 ;

— la figure 16B illustre une autre variante de la figure 15, sous forme plus schématique ;

— la figure 17 illustre une façon de resynchroniser des données numériques issues d'une station, tandis que la figure 17A donne une représentation symbolique de ce transfert de rythme ;

— la figure 18 illustre une portion de réseau selon l'invention entre deux stations ;

— la figure 19A illustre schématiquement une interconnexion désirée entre quatre stations, tandis que la figure 19B donne une première manière de réaliser une telle interconnexion, selon l'invention ;

— les figures 20 à 23 donnent quatre autres manières de réaliser des interconnexions entre quatre stations ;

— les figures 24 et 24A illustrent une cinquième et une sixième manières de réaliser une interconnexion entre quatre stations ;

— les figures 25A et 25B illustrent une autre manière d'assurer la redondance entre des répéteurs-échangeurs selon l'invention ;

— la figure 26 illustre une variante de l'invention, également relative à la redondance entre dispositifs ; et

— la figure 27 illustre schématiquement un autre exemple de réseau à quatre stations selon l'invention.

Les dessins annexés comportent pour l'essentiel des informations de caractère certain. En conséquence, ils pourront non seulement servir à mieux faire comprendre la description ci-après, mais aussi contribuer à la définition de l'invention, le cas échéant.

Différentes conventions et représentations symboliques sont utilisées dans les dessins. Elles seront explicitées au fur et à mesure. Dès à présent, il est précisé que l'on appelle "fibre" non pas une fibre optique au sens physique du terme, mais bien la suite continue de fibres complétées de répéteurs et autres dispositifs régénérateurs électriques permettant d'assurer la transmission d'une station à une autre. Dans le cas d'une fibre quine va pas de station à station, on parlera de "tronçon de fibre".

Par ailleurs, les transmissions numériques invoquées dans la suite de la description sont supposées être au haut débit D nominal du réseau de transmission sous-marin.

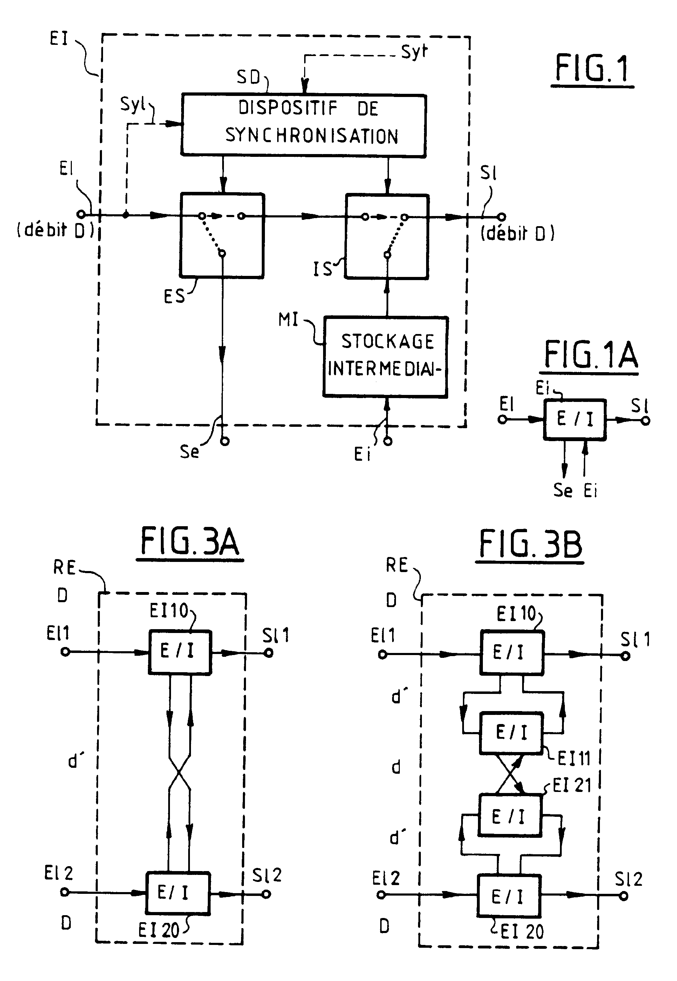

Sur la figure 1 est représenté un commutateur d'extraction-insertion noté EI. L'entrée E1 au débit D est appliquée à un commutateur d'extraction ES possédant une sortie normale illustrée par la voie en trait tireté, et une sortie d'extraction illustrée par la voie en trait pointillé. Cette sortie d'extraction délivre un signal Se, qui est l'une des sorties du commutateur d'extraction-insertion EI.

La voie directe de sortie du commutateur d'extraction ES est appliquée à une entrée d'un commutateur d'insertion IS. Cette entrée, qui constitue la voie normale, peut être transmise comme indiqué par la flèche sur trait tireté à la sortie de ligne au débit D, notée S1. Cependant, cette sortie S1 peut aussi être fournie, en mode insertion, par l'autre entrée du commutateur IS, comme illustré par la flèche sur trait pointillé. Cette autre entrée est connectée à la sortie d'une mémoire MI de stockage intermédiaire, dont l'entrée est connectée à l'entrée Ei du commutateur d'extraction-insertion EI.

Aux temps de réponse des circuits prés, les deux commutateurs ES et IS fonctionnent de manière synchrone, c'est-à-dire qu'ils sont soit tous deux dans la voie directe, reliant alors l'entrée E1 à la sortie S1, soit respectivement en mode extraction et insertion, reliant alors l'entrée E1 à la sortie Se, d'une part, et l'entrée Ei à la sortie S1, d'autre part. La commande synchronisée des deux commutateurs ES et IS est assurée par un dispositif de synchronisation SD. Il faut aussi que cette commande soit synchronisée sur la trame du signal à haut débit D. On veut en effet pouvoir extraire des segments bien précis, correspondant à un affluent particulier, dans le signal à haut débit D, et, de même, y insérer des segments bien précis d'un autre affluent, qui viennent par l'entrée Ei. La mémoire MI permet, par son fonctionnement en tampon, d'assurer le stockage de données intermédiaires suffisant, compte tenu du fait que les données à insérer n'ont aucune raison d'être en synchronisme temporel rigoureux avec les données à extraire.

La synchronisation requise sur les segments que contient le signal de ligne peut être assurée soit de manière locale, comme illustré par la ligne en trait tireté Syl, qui provient de l'entrée E1, soit de manière externe, comme illustré par l'autre entrée Syt du dispositif de synchronisation SD.

En synchronisation locale, le simple examen du signal d'entrée permet d'y détecter les segments de trame. Des codes de commande appropriés permettent de répérer celui des segments de trame qu'il y a lieu d'extraire. L'homme de l'art sait que les deux mêmes fonctions peuvent être assurées en synchronisation télécommandée.

La figure 1A illustre un symbolisme utilisé pour représenter le bloc de la figure 1, dans la plupart des autres figures.

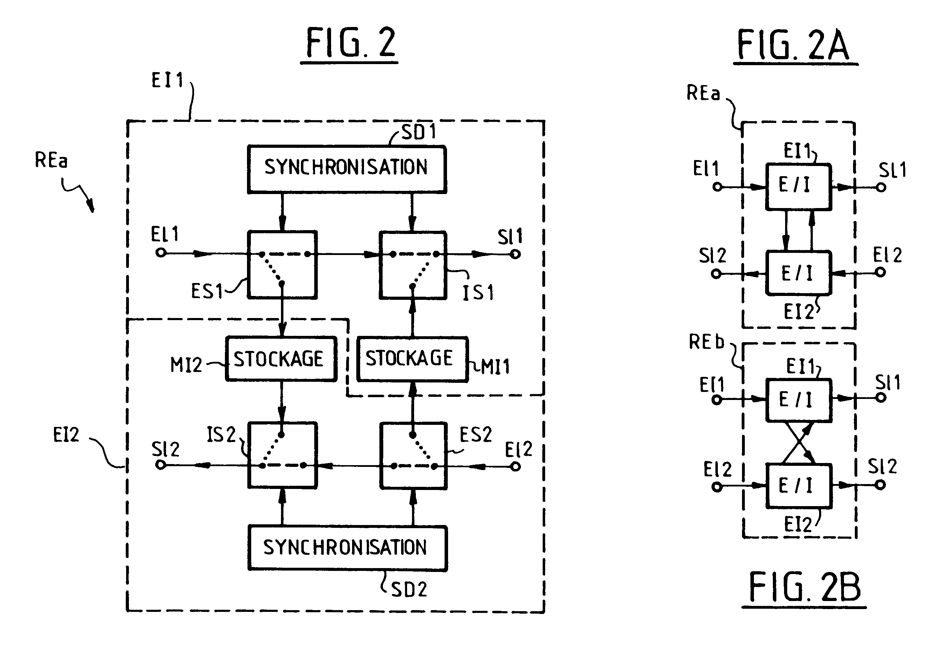

La figure 2 illustre le principe d'un module d'échange constitué d'une paire de commutateurs d'extraction-insertion EI1 et EI2, montés entre deux fibres de sens opposé. La première fibre est définie entre l'entrée E11 et la sortie S11, la seconde fibre passe de l'entrée E12 à la sortie S12. Les deux commutateurs d'extraction-insertion ont leurs dispositifs respectifs de synchronisation SD1 et SD2. Les synchronisations peuvent se faire par exemple respectivement sur l'entrée E11 et l'entrée E12. Dans sa réalisation, le module d'échange pourra être constitué d'un circuit électrique uni que, les différentes parties n'étant pas physiquement séparées. Dans la suite, nous le désignerons par "paire de" ou "deux commutateurs d'extraction-insertion".

Complété d'opto-coupleurs, ainsi que d'amplificateurs d'émission et de réception (non représentés sur la figure 2) et des fonctions annexes de télésurveillance, alimentation, protection, etc, des répéteurs et inséré dans un boîtier mécanique approprié, un tel dispositif constitue un "répéteur-échangeur", noté ici REa.

La figure 2A donne une représentation symbolique d'un répéteur-échangeur REa opérant entre deux fibres de sens opposé. La figure 2B donne une représentation symbolique d'un répéteur-échangeur REb opérant entre deux fibres de même sens.

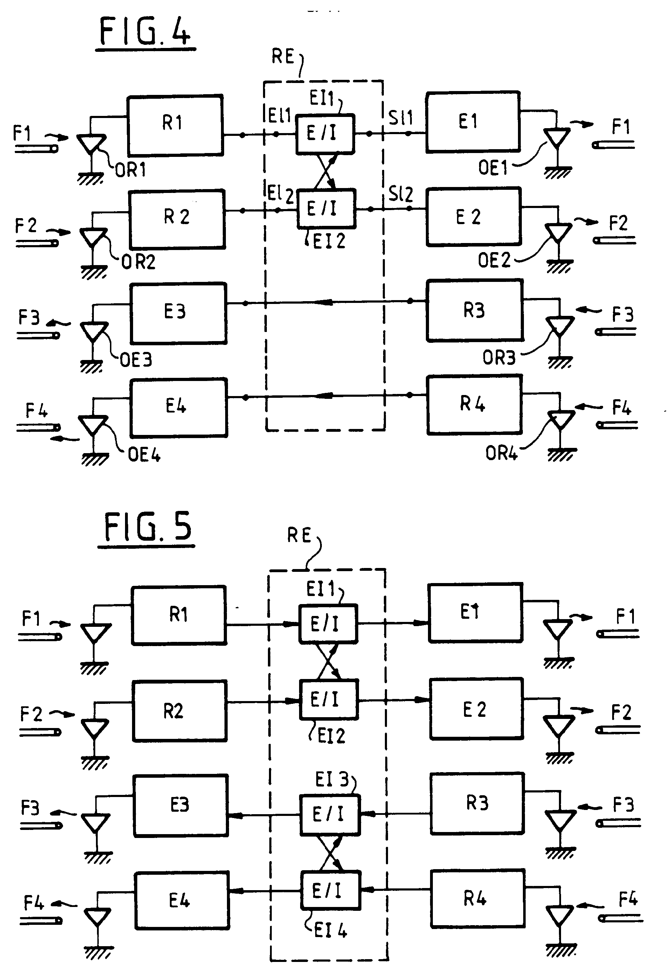

Les figures 3A et 3B concernent le cas où l'on désire opérer à des débits intermédiaires.

La figure 3A montre simplement que l'on peut parfaitement faire opérer deux commutateurs d'extraction EI10 et EI20 à un débit d' qui est intermédiaire entre le haut débit D de la transmission et le bas débit d des affluents individuels.

La figure 3B montre que l'on peut utiliser deux commutateurs d'extraction EI10 et EI20 opérant au débit intermédiaire d', et alimentant eux-mêmes deux autres commutateurs d'extraction-insertion EI11 et EI21 qui, pour leur part, opèrent au bas débit d.

Les dispositifs selon l'invention sont mis en oeuvre lorsque les signaux se trouvent à un niveau électrique, et non pas à un niveau optique comme c'est le cas dans la fibre elle-même. Cette condition se trouve remplie dans des répéteurs-échangeurs.

La figure 4 fait apparaître un tél répéteur-échangeur. Deux fibres F1 et F2 assurent une transmission directionnelle de la gauche vers la droite. Deux autres fibres F3 et F4 assurent une transmission directionnelle de la droite vers la gauche.

Les signaux optiques issus des fibres F1 et F2 sont appliqués à des opto-coupleurs de réception respectifs OR1 et OR2, suivis d'amplificateurs de réception R1 et R2. En face, des amplificateurs d'émission E1 et E2 fournissent les signaux des opto-coupleurs d'émission OE1 et OE2, qui retransmettent leurs signaux respectifs aux fibres F1 et F2 vers l'aval.

La disposition est la même, mais de la droite vers la gauche, pour les fibres F3 et F4.

Dans la description de l'invention, on suppose qu'il existe une séparation physique entre les amplificateurs de réception R et les amplificateurs d'émission E. Souvent en effet des accès aux signaux électriques sont possibles entre les parties émission et réception du régénérateur. De tels accès sont généralement prévus à la conception des régénérateurs, car on a souvent besoin de les utiliser pour la caractérisation indépendante des parties émission et réception, et aussi parce qu'il peut s'y brancher d'autres dispositifs, tels qu'un dispositif de rebouclage de la liaison sur elle-même utilisée pour la localisation des défauts, ou une matrice de commutation entre régénérateurs pour des systèmes assortis d'une redondance, comme on le verra plus loin.

La mise en oeuvre de l'invention consiste à insérer des paires de commutateurs d'extraction-insertion, couplées l'une à l'autre, entre deux fibres, dans un tel régénérateur.

Ainsi, sur la figure 4, la sortie de l'amplificateur R1 constitue l'entrée E11 du commutateur EI1, dont la sortie S11 fournit l'entrée de l'amplificateur E1. Le montage est le même pour le commutateur d'extraction-insertion EI2 entre les amplificateurs R2 et E2. Les deux commutateurs EI1 et EI2 font l'objet d'un montage croisé (figure 2B), puisque les deux fibres sont de même sens.

Dans la réalisation pratique, les accès mentionnés ci-dessus ne seront pas forcément matérialisés, car l'ensemble des fonctions ne sera pas toujours réalisé par juxtaposition de circuits bien identifiés si l'on veut optimiser la réalisation.

Sur la figure 4, les deux autres fibres F3 et F4 font l'objet d'une transmission directe entre la partie réception R et la partie émission E.

En variante (figure 5), on prévoit deux autres commutateurs d'extraction-insertion EI3 et EI4 permettant des échanges de segments entre les fibres F3 et F4, tout comme le font EI1 et EI2 entre les fibres F1 et F2.

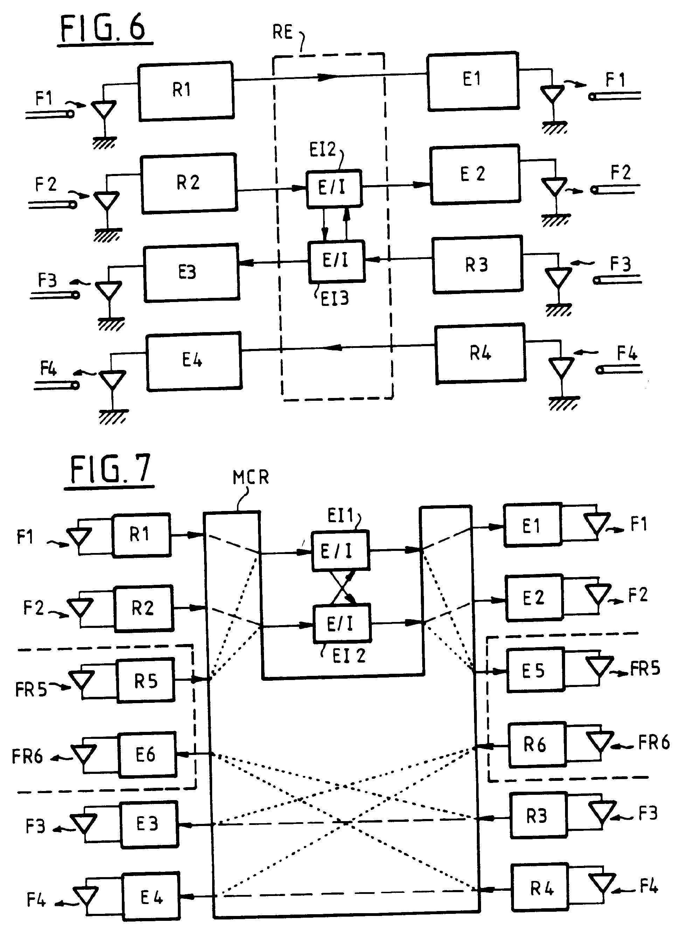

Sur la figure 6, les commutateurs d'extraction-insertion EI2 et EI3 sont ici montés entre deux fibres de sens inverse F2 et F3, et leur illustration est donc conforme à la figure 2A.

La figure 7 fait apparaître un régénérateur équipé selon l'invention, mais dont la structure est plus complexe. En effet, par rapport aux figures 4, 5 et 6, on ajoute deux fibres FR5 et FR6 destinées à assurer une redondance, c'est-à-dire à permettre de continuer la transmission lorsque d'autres fibres sont défaillantes. Ces fibres FR5 et FR6 sont de sens opposé.

Suivant une convention déjà utilisée, les trajets normaux sont illustrés en trait tireté, tandis que les trajets de variantes, pour la redondance, sont illustrés en trait pointillé. Les commutations sont réalisées à l'aide d'une matrice de commutation et de reroutage MCR, dont le principe est connu.

L'homme de l'art comprendra que dans l'état normal, le dispositif de la figure 7 fonctionne comme celui de la figure 4.

Mais l'une ou l'autre des fibres F1 et F2 peut être suppléée par la fibre de redondance FR5. De même, si l'une des fibres F3 et F4 est en défaillance vers l'aval, les signaux amont peuvent être repris par la fibre de redondance FR6 ; si l'une ou l'autre des fibres F3 et F4 est défaillante en amont, son signal transite par la fibre FR6, et peut donc être appliquée vers l'aval à la section de fibre concernée.

Il est également possible de réaliser un répéteur-échangeur dont le fonctionnement à l'état normal est semblable à celui des dispositifs des figures 5 et 6, en insérant le nombre approprié de dispositifs d'échange dans la matrice de commutation et de remontage MCR. Ceci n'est pas représenté mais l'homme de l'art l'imaginera facilement.

Pour des raisons d'encombrement et de consommation, il est plus simple de mettre un module d'échange unique (une seule paire de commutateurs d'extraction-insertion) dans un même répéteur, selon la figure 4. Cependant, les différentes variantes et en particulier celles des figures 5, 6 et 7 sont également intéressantes.

Dans la suite, on supposera, sauf mention contraire, qu'un répéteur-échangeur contient un seul module d'échange.

Les applications en liaison sous-marine nécessitent une haute fiabilité. Il faut donc les prémunir contre une panne éventuelle d'un dispositif d'échange, afin de permettre l'acheminement du trafic au travers du "répéteur-échangeur", même quand son dispositif d'échange ne fonctionne pas. Cela peut se faire de plusieurs manières.

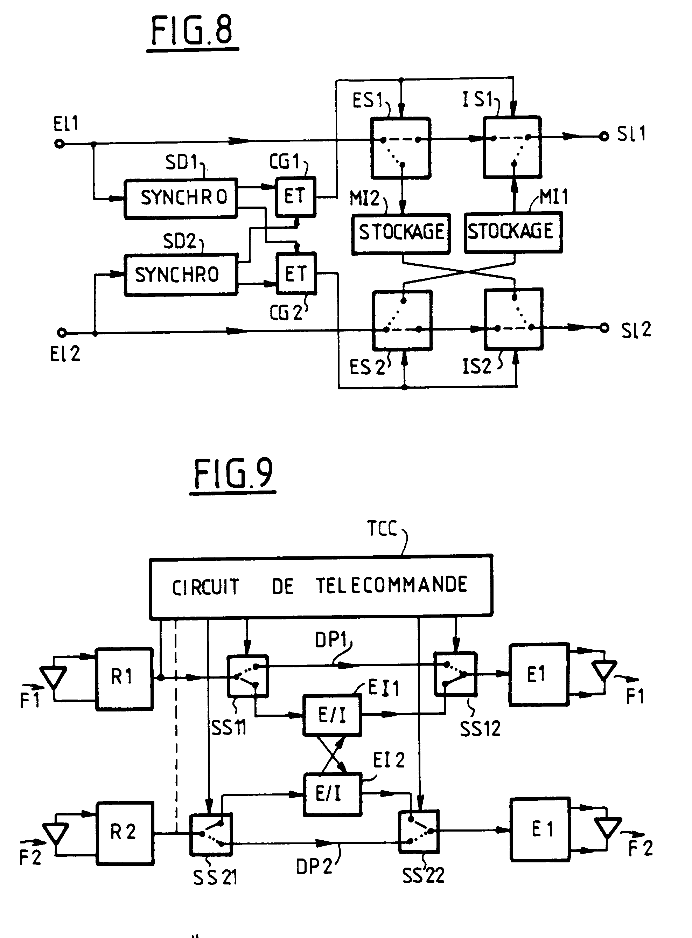

Sur la figure 8, les commutateurs d'extraction-insertion ES1, IS1, ES2, IS2 sont rendus "transparents" aux signaux à débit D, tant qu'ils ne peuvent pas être l'un et l'autre synchronisés sur le signal au bas débit d qu'ils doivent chacun extraire. Cette synchronisation se fait alors de manière interne, par reconnaissance du message à extraire.

Ainsi, les circuits de synchronisation SD1 et SD2 sont respectivement reliés aux entrées E11 et E12. Mais la sortie de synchronisation du circuit SD1 ne peut être appliquée aux commutateurs ES1 et IS1 que lorsque la porte CG1 utilisée à cet effet, qui est une porte ET, reçoit confirmation de ce que la synchronisation est également acquise au niveau de l'autre circuit de synchronisation SD2. La porte ET CG2 fait de même pour la liaison entre le circuit de synchronisation SD2 et les commutateurs ES2 et IS2.

La figure 9 illustre un autre élément de sécurité, qui n'est pas incompatible avec le précédent. Le dispositif d'échange constitué de la paire de commutateurs d'extraction-insertion EI1 et EI2 est encadré par quatre commutateurs de sécurité SS11, SS12, SS21 et SS22. La sortie de l'amplificateur R1 relatif à la fibre F1 est appliquée à l'entrée du commutateur SS11 qui peut aiguiller le signal soit vers le commutateur EI1 (mode normal), soit vers une voie directe DP1. A l'autre bout, la sortie du commutateur EI1 est reprise dans la voie normale du commutateur de sécurité SS12, dont l'autre entrée est la voie directe DP1, tandis que sa sortie va vers l'amplificateur d'émission E1.

Le montage est le même pour l'autre commutateur d'extraction-insertion EI2.

L'ensemble est régi par un circuit de télécommande TCC qui assure un positionnement conjoint convenable des quatre commutateurs SS11, SS12, SS21 et SS22, qui sont soit tous dans la voie normale vers les commutateurs d'extraction-insertion EI1 et EI2, soit tous sur leurs trajets directs respectifs DP1 et DP2.

Le signal de télécommande proprement dit peut venir soit par la fibre F1 amont, comme illustré par une liaison en trait continu, soit par la fibre F2 amont, comme illustré par une liaison en trait tireté.

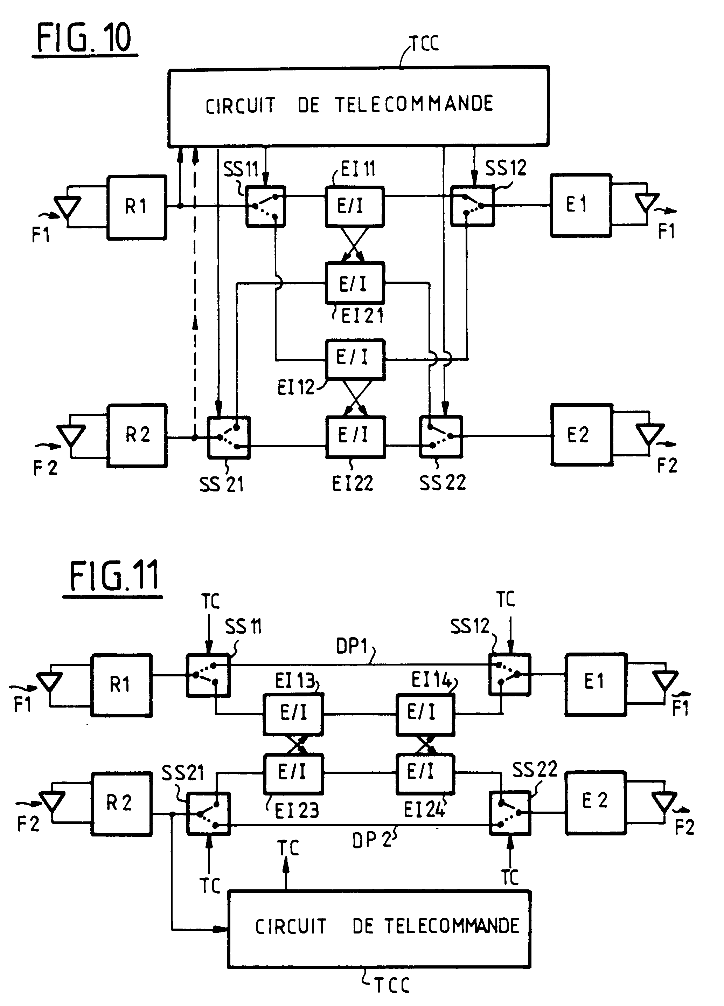

La figure 10 illustre une variante perfectionnée de la figure 9. Le simple examen de cette figure montrera à l'homme de l'art que les trajets directs sont remplacés par une autre paire de commutateurs d'extraction-insertion, couplés entre eux dans le sens convenable compte tenu du fait que les fibres sont de même sens. Il s'agit là d'un montage parallèle qui, pour le reste, ne diffère pas fondamentalement du cas de la figure 9.

Sur la figure 11, la sécurité est obtenue par un montage série de deux paires de commutateurs d'extraction-insertion, respectivement EI13 et EI23 d'une part, EI14 et EI24 d'autre part. Pour la fibre F1, des commutateurs SS11 et SS12 permettent de choisir entre le trajet direct DP1 ou le montage en cascade des organes EI13 et EI14. Il en est de même pour la fibre F2, avec les commutateurs de sécurité SS21 et SS22, le trajet direct DP2, et la cascade des organes EI23 et EI24.

La synchronisation pourrait être interne, pour chaque paire de commutateurs d'extraction-insertion, comme déjà décrit à propos de la figure 8. Dans ce cas, c'est la paire de commutateurs d'extraction-insertion qui se synchronise la première qui va ensuite rester en fonctionnement.

Une variante, considérée actuellement comme préférable, consiste à choisir la paire de commutateurs d'extraction-insertion qui va fonctionner par télécommande. L'usage d'une telle télécommande permet de mettre en service des chemins parallèles les directs dans les autres régénérateurs-échangeurs susceptibles d'agir sur les mêmes signaux.

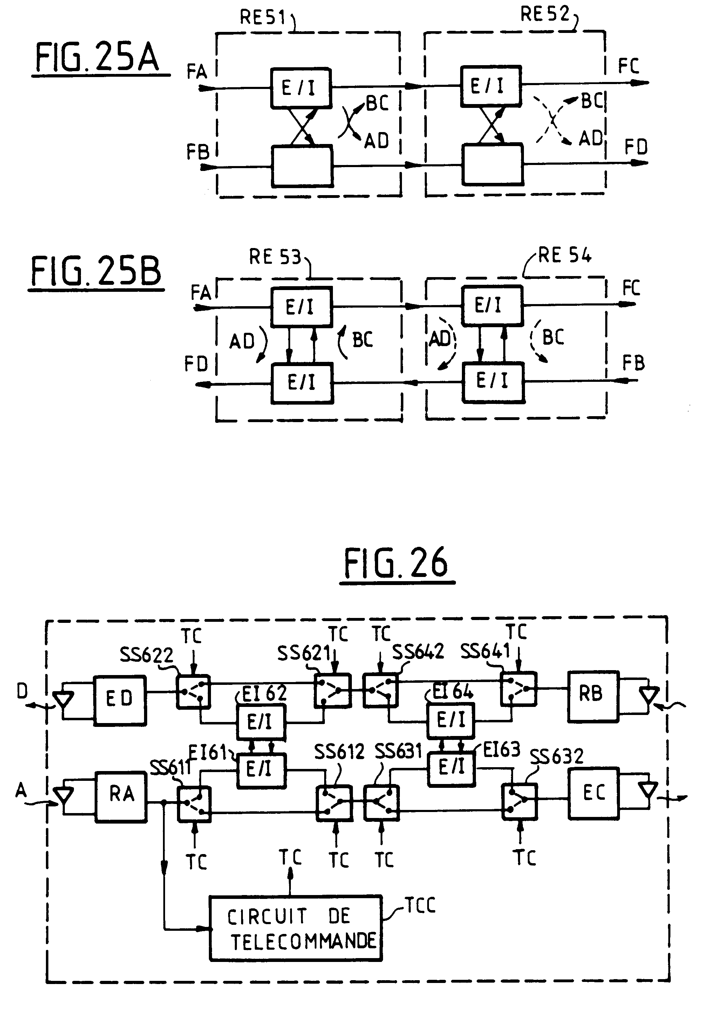

D'autres variantes seront décrites plus loin, en référence notamment aux figures 25 et 26.

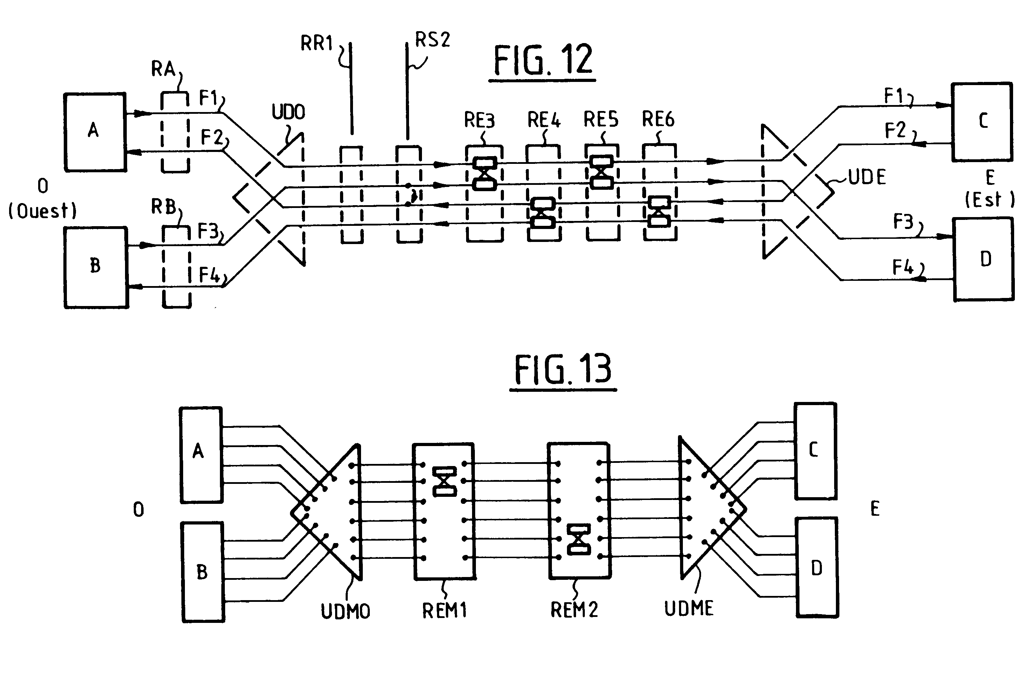

La figure 12 illustre à titre d'exemple une première application de l'invention pour la réalisation d'un réseau sous-marin utilisant des répéteurs-échangeurs.

Par convention, on désigne par O (Ouest) les stations A et B situées à gauche de la figure. Symétriquement, on désigne par E (Est) les stations C et D situées ici à droite de la figure.

Deux fibres F1 et F2 assurent les transmissions entre les stations A et C, dans l'un et l'autre sens. Deux fibres F3 et F4 font de même entre les stations B et D. Au niveau d'une unité de dérivation Ouest, notée UDO, les fibres F1, F2, F3, F4 sont regroupées pour définir le câble sous-marin. Réciproquement, à l'Est, une unité de dérivation UDE permet la séparation des fibres pour qu'elles aillent respectivement vers les stations C et D.

Un répéteur ordinaire RA est prévu entre la station A et l'unité de dérivation UDO. Un répéteur ordinaire RB est prévu de même entre la station B et la même unité de dérivation UDO. Un troisième répéteur ordinaire RR1 est prévu immédiatement en aval de la station UDO, sur le câble sous-marin.

Il est suivi d'un répéteur synchroniseur RS2, qui assure l'échange d'informations d'horloge entre la fibre F3 partant de B pour aller en D, et la fibre F2 partant de C pour aller en A. En ce qui concerne la cadence d'horloge, on suppose par exemple que la station mère est en B. La station A pourra alors être synchronisée sur la station B par l'intermédiaire des fibres F3 et F2. La station C est synchronisée sur la station A par l'intermédiaire de la fibre F2 et de la fibre F1. Enfin, la station D est synchronisée sur la station B par l'intermédiaire de la fibre F3.

Bien entendu, la fonction de synchronisation peut être assurée d'une autre manière. On peut en effet assurer le transfert de l'horloge non seulement dans un répéteur synchroniseur, mais aussi dans une unité de dérivation.

Chaque fibre supporte un signal de haut débit D, obtenu par multiplexage de N signaux au débit de base d.

Si par exemple on souhaite transmettre :
$n1$ signaux de base entre A et C ;
$n2$ signaux de base entre A et D ;
$n3$ signaux de base entre B et C ;
$n4$ signaux de base entre B et D, on aura globalement des inégalités qui font que $n1 + n2$, $n3 + n4$, $n1 + n3$ et $n2 + n4$ doivent tous être inférieurs ou égales à N.

Les répéteurs-échangeurs RE3, RE4, RE5 et RE6 permettent d'établir les échanges voulus pour assurer les interconnexions non seulement entre A et C d'une part, B et D d'autre part comme le permettent les fibres, mais aussi entre A et D et B et C.

Pour réaliser la liaison indiquée plus haut, il faudra échanger entre les fibres les $n2$ signaux de base qui circulent entre A et D et les $n3$ signaux de base qui circulent entre B et C, et ce pour chaque sens de transmission. Comme un dispositif d'échange affecte deux signaux au débit de base, il faudra donc disposer d'un nombre k de dispositifs d'échange au moins égal au plus grand des deux nombres entiers $n2$ et $n3$, sur chaque sens de transmission.

Ceci peut être réalisé :

— soit avec 2k répéteurs-échangeurs si chacun contient un seul dispositif d'échange, comme illustré sur la figure 4 ; ou

— k répéteurs-échangeurs si chacun contient deux dispositifs d'échange selon le schéma de la figure 5.

Si l'on avait établi les chemins directs par fibre optique entre A et D et entre B et C, le nombre k aurait été égal au plus grand des deux nombres n1 et n4.

En pratique, on pourra choisir la configuration qui donne la plus faible valeur pour k. Le nombre k peut, dans ce cas, être toujours inférieur ou égal à N/2. Si on n'effectue pas cette optimisation de la configuration, le nombre k restera de toute manière inférieur à N.

La situation et le nombre total des répéteurs (ordinaires, synchroniseurs, échangeurs) de la figure 12 ne sont que des exemples. En fait ils dépendent en particulier de la largeur des tronçons de câble.

Le schéma de la figure 12 concerne en fait une configuration simple, qui obéit aux conditions ci-après :

— la somme du nombre de paires de fibres dans les branches incidentes, à chacune des extrémités, est égale au nombre de paires de fibres dans la partie commune sous-marine, où les fibres coexistent toutes dans le même câble, et où l'échange peut donc se faire ;

— la longueur de la partie commune sous-marine est suffisante pour insérer le nombre voulu de répéteurs-échangeurs.

Il n'en sera pas nécessairement ainsi dans la pratique. En particulier, la pratique veut très souvent que l'on utilise des fibres optiques en redondance. La figure 13 est à cet égard un schéma de réseau comparable la figure 12, mais avec redondance. Les stations A et B sont reliées par deux paires de fibres à l'unité de dérivation Ouest UDMO. Les stations C et D sont également reliées par deux paires de fibres à l'unité de dérivation Est UDME. Le trajet sous-marin comprend aussi deux fibres optiques supplémentaires pour la redondance.

Dans une telle configuration, des matrices de commutation de redondance, de type connu, sont prévues dans les unités de dérivation UDMO et UDME.

De même, les répéteurs-échangeurs (ici réduits schématiquement au nombre de deux) sont équipés de matrices de commutation de redondance, par exemple comme déjà décrites à propos de la figure 7.

On considérera maintenant des cas où le nombre de paires de fibres en fonctionnement normal dans les branches incidentes est supérieur au nombre de paires de fibres en fonctionnement normal dans la partie commune du câble sous-marin.

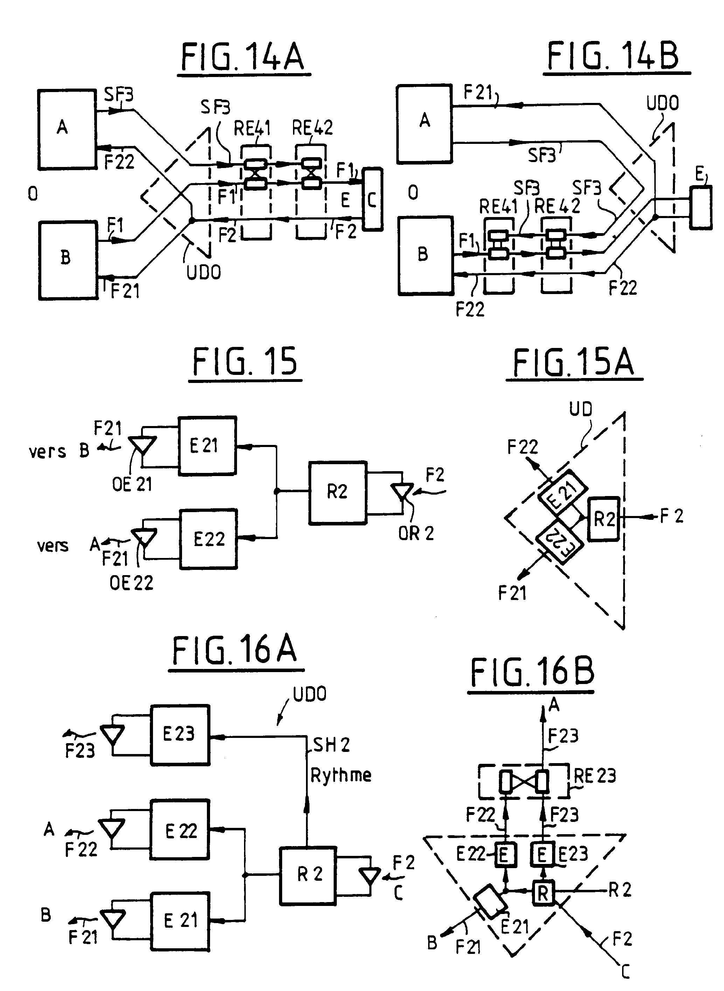

Sur la figure 14A, les deux stations A et B situées à l'extrémité Ouest communiquent respectivement avec l'extrémité Est à l'aide de n1 et de n2 signaux au débit de base. L'extrémité Est peut être constituée d'une station unique C, ou bien de plusieurs stations.

Si la somme n1 + n2 est inférieure à N, il n'est pas utile de disposer de plus d'une paire de fibres dans le câble sous-marin dirigé vers l'extrémité Est.

Si maintenant n1 est inférieur à n2, on établira de préférence le chemin direct entre la station B et la station C située à l'Est. Mais, pour pouvoir assurer l'échange, il faut que la fibre d'émission issue de A coexiste dans le même câble avec la fibre d'émission issue de B, sur une longueur permettant d'insérer un nombre suffisant de répéteurs-échangeurs.

Cela peut se faire en rajoutant une fibre unique, soit dans le câble situé entre l'unité de dérivation UDO et la station C (figure 14A), soit dans le câble situé entre l'unité de dérivation UDO et la station B (figure 14B).

Pour assurer l'échange, il suffira de disposer n1 répéteurs-échangeurs, réalisés selon le schéma de la figure 4 dans le premier cas, ou celui de la figure 6 dans le second cas, afin d'assurer l'ensemble des échanges dans le sens Ouest-Est.

En ce qui concerne l'autre sens de transmission, il suffit de dupliquer le signal de retour (provenant de C) au niveau de l'unité de dérivation UDO.

Ceci peut être obtenu en disposant (figure 15) deux amplificateurs d'émission E21 et E22 en sortie d'un seul amplificateur de réception R2, couplé par un opto-coupleur de réception OR2 à la fibre F2.

Les opto-coupleurs de sortie respectifs OE21 et OE22 des amplificateurs E21 et E22 alimentent deux tronçons de fibre respectifs F21 et F22 qui vont vers les stations B et A. Une représentation conventionnelle d'un tel montage est donnée sur la figure 15A.

L'homme de l'art comprendra que cela peut aussi se faire à l'aide d'un simple coupleur optique, sans amplification de régénération. Ceci pourrait également se faire dans un répéteur ou un répéteur-échangeur, mais à un coût plus élevé.

La duplication du signal retour permet de plus de transmettre à la station A un signal dont la fréquence d'horloge est déterminée par la station B ou la station C. Il en résulte une facilité de synchronisation des équipements de multiplexage situés en A, vis-à-vis de l'horloge de synchronisation générale du système.

En bref, sur la figure 14A, les émissions issues de A partent sur un tronçon de fibre SF3, qui, après l'unité de dérivation UDO, va passer dans un nombre suffisant de répéteurs-échangeurs tels que RE41 et RE42 pour assurer le passage de toutes les informations vers la fibre F1 en direction de la station C.

Sur la figure 14B, la fibre SF3 revient vers la station B après passage dans l'unité de dérivation UDO, pour retrouver là aussi des répéteurs-échangeurs RE41 et RE42 fonctionnant comme précédemment, mais cette fois sur la partie de la fibre F1 qui se trouve entre l'unité de dérivation UDO et la station B.

En ce qui concerne le retour, pareille disposition ne permet pas d'assurer le secret de l'information. En effet, le message destiné à B se retrouve intégralement en A, et réciproquement.

Une manière de s'affranchir de ce problème est illustrée sur les figures 16A et 16B.

Dans l'unité de dérivation UDO, on duplique comme précédem ment le signal issu de la fibre F2 provenant de C, pour le transmettre sur la fibre F22 allant vers A. On transmet également sur une fibre F23 un signal à la fréquence de rythme, mais sans contenu de message, fourni par le circuit de récupération de rythme se trouvant dans l'amplificateur de réception R2 du régénérateur installé dans l'unité de dérivation. Ce signal de rythme est noté SH2.

La figure 16B reprend sous forme schématique le montage de la figure 16A, à l'intérieur d'un triangle définissant l'unité de dérivation UDO.

Cette figure montre en plus qu'en utilisant des répéteurs-échangeurs tels que RE23, on va pouvoir remplacer des segments du pur signal de rythme SH2 par les messages effectivement destinés à A, qui existent sur la fibre F22. C'est donc ici la fibre F23 qui est directement reliée à A par la voie normale de répéteur-échangeur tel que RE23. Et ces répéteurs reçoivent la fibre F22 pour remplacer le signal de rythme par des informations destinées à A.

Les dispositifs d'échange de ces répéteurs-échangeurs RE23 peuvent être télécommandés, ou bien se synchroniser à partir de la fibre F22 transmettant le signal dupliqué.

Il serait également possible de prolonger le tronçon de fibre F22 jusqu'à la station A et au contraire d'y remplacer les segments de signal destinés à B par du rythme, mais cela conduirait à un nombre plus élevé de répéteurs-échangeurs si $n_1$ est inférieur à $n_2$.

Cette configuration peut cependant poser des problèmes pratiques pour les répéteurs car le signal que l'on obtient ne présente pas les caractéristiques habituellement nécessaires, notamment en ce qui concerne le code en ligne, si un tel code est choisi pour faciliter la transmission dans les répéteurs ou leur télésurveillance.

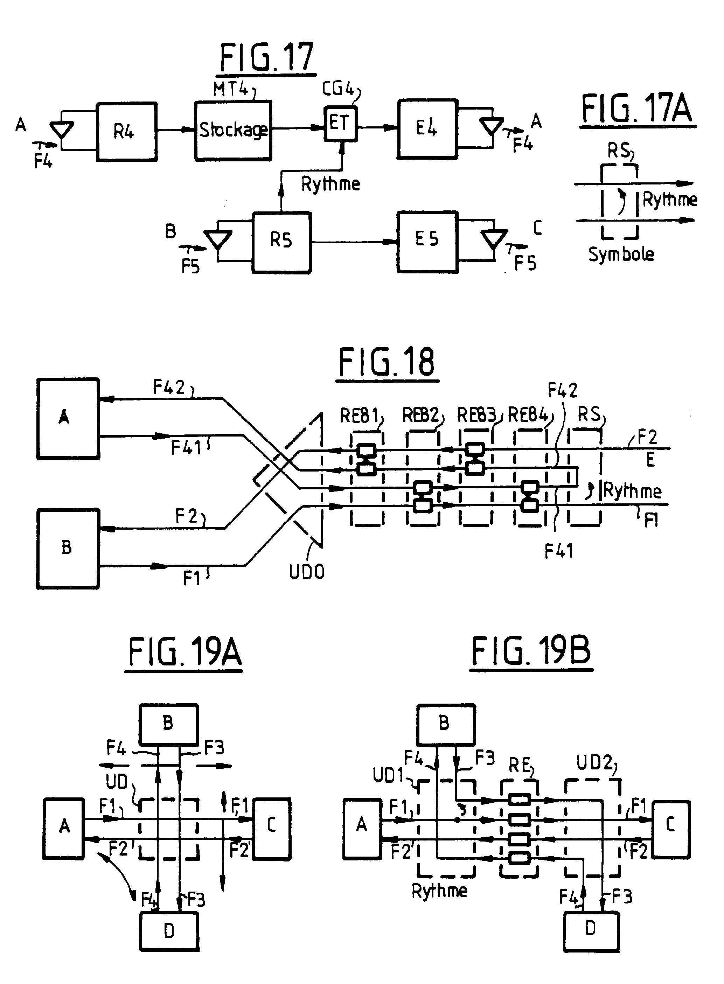

On décrira maintenant en référence aux figures 17 et 17A une variante qui résoud ce problème.

La figure 17 est limitée à une fibre assurant la liaison entre B et C, à travers notamment l'amplificateur de réception R5 et l'amplificateur d'émission E5 de l'unité de dérivation UDO. Comme précédemment, l'amplificateur de réception R5 définit un signal de rythme.

Les informations partant de la station A sont reçues dans l'unité UDO par un amplificateur de réception R4, suivi d'une mémoire de stockage MT4, puis d'une porte CG4, qui permet la restitution des informations stockées dans la mémoire MT4 au rythme issu de l'amplificateur de réception R5. Ces informations sont alors reçues par l'amplificateur d'émission E4 qui renvoie donc vers la station A les mêmes informations à travers l'aval de la fibre F4.

Cela permet de renvoyer à la station A son propre signal, après l'avoir synchronisé sur le message provenant de B (ou de C). La station A reçoit ainsi l'information de rythme sans avoir besoin de connaître aucun message transitant entre deux autres stations.

Comme précédemment, on duplique le signal venant de la station C pour le transmettre sur une fibre dirigée vers A, mais n'aboutissant pas à A. Comparativement aux figures 14 et suivantes, il s'agit donc d'un tronçon de fibre F22. Des répéteurs-échangeurs (non représentés ici) sont montés entre le tronçon de fibre dupliqué F22 provenant de C et la fibre F4 qui, jusqu'à présent, renvoyait à A son propre signal. A l'aide de ces répéteurs-échangeurs, on réalise le transfert des messages destinés à A entre le tronçon de fibre F22 et la fibre F4.

Il reste encore que la station B va recevoir les messages destinés à A. Pour éviter cela, on peut facilement rendre la structure symétrique en renvoyant également vers B soit le signal d'horloge (comme pour la figure 16B), soit son propre signal (comme ci-dessus), et en assurant à l'aide de répéteurs-échangeurs le transfert sur les fibres portant ces signaux du message destiné à B et provenant de C.

On notera au passage, sur la figure 17A, un symbole utilisé ici pour indiquer le passage de l'information de rythme entre deux fibres, par exemple au niveau d'un répéteur synchroniseur RS.

La figure 18 montre une autre façon, élégante, de résoudre le problème consistant à reboucler vers la station A la fibre issue de cette même station.

Comme sur les figures 14A, 14B et 16B, on dispose ici d'une station B communiquant par deux fibres optiques F1 et F2 avec une station C située à l'autre extrémité, c'est-à-dire à l'Est.

La différence relativement aux versions précédentes réside en ce que la station A est munie d'une fibre départ F41 qui traverse l'unité de dérivation UDO, pour cohabiter avec les fibres F1 et F2 sur une certaine longueur de celles-ci, et revenir ensuite par F42 vers la même station A.

A l'extrémité Est de cette fibre F41-F42 est prévu un répéteur synchroniseur assurant le passage de l'information de rythme, en provenance par exemple de la fibre F1.

Entre l'unité de dérivation UDO et ce répéteur synchroniseur RS sont prévus des répéteurs-échangeurs 81, 82, 83 et 84 permettant tous les échanges voulus entre les différentes stations A, B et C. Plus précisément, la partie F41 permet le transfert des signaux issus de A sur la fibre F1 allant vers C. Le transfert des messages issus de la station C à destination de la station A se fait entre la fibre F2 et la partie F42 de la fibre rebouclée sur la station A.

L'homme de l'art comprendra mieux, maintenant, que la présente invention réalise un multiplexage distribué de signaux transitant sur des fibres optiques, à l'aide d'une pluralité de répéteurs-échangeurs répartis dans l'espace. Le nombre de répéteurs-échangeurs à utiliser est déterminé par le nombre de messages à échanger. Il s'ensuit une longueur minimale de câble sous-marin où les fibres doivent cohabiter. Cette condition ne sera pas toujours remplie a priori dans la pratique. Le cas générique où cette condition n'est pas remplie est celui de la figure 19A: deux paires de fibres, F1, F2 d'une part, F3, F4 d'autre part, relient respectivement des stations A et C d'une part et B et D d'autre part. Elles doivent se croiser en une unité de dérivation unique UD raccordant quatre câbles sous-marins.

L'homme de l'art sait qu'en fait, il est préférable, sur le plan des opérations maritimes, de prévoir deux unités de dérivation très rapprochées, dont la distance est de l'ordre de l'espacement moyen entre répéteurs. Ainsi, sur la figure 19B, l'unité de dérivation UD de la figure 19A se dédouble en une unité de dérivation UD1 et une unité de dérivation UD2.

La présente invention peut tout d'abord être mise en oeuvre en insérant un nombre limité de répéteurs-échangeurs RE entre les deux unités de dérivation voisines UD1 et UD2, comme illustré sur la figure 19B. Le passage de l'information de rythme nécessaire à la synchronisation générale peut se faire par exemple au niveau de l'unité de dérivation UD1.

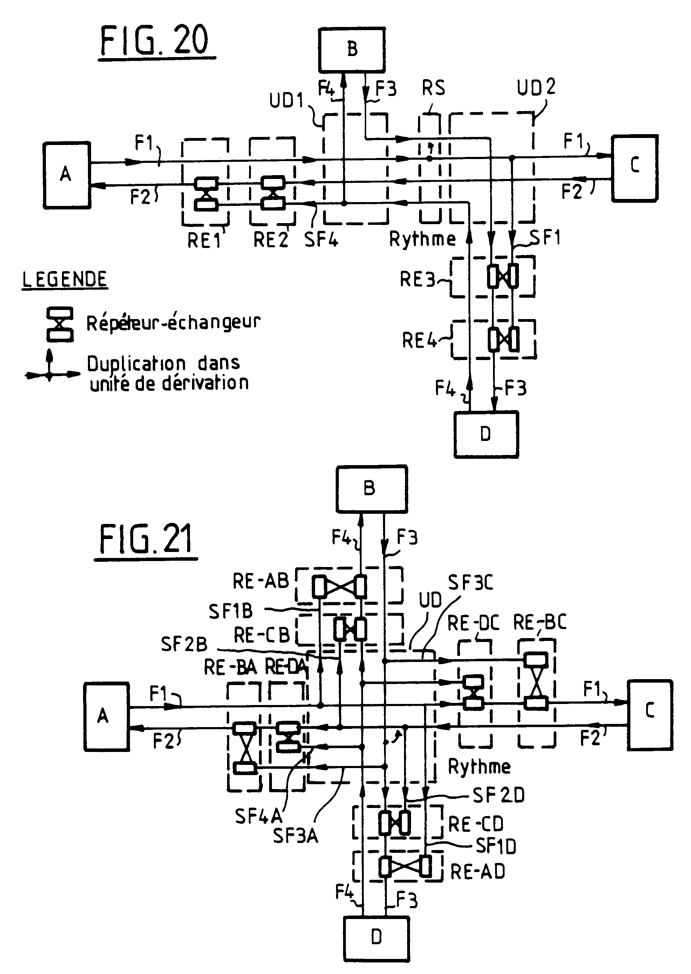

Une variante plus évoluée est illustrée sur la figure 20. Elle consiste à dupliquer le signal au niveau de l'une des unités de dérivation, ici UD1. On observe en effet que la fibre F4 communique non seulement avec la station B, mais aussi avec un tronçon de fibre SF4 orienté vers A. Des répéteurs-échangeurs tels que RE1 et RE2 permettent l'envoi d'informations de D à A.

Un répéteur-synchroniseur RS est branché entre les deux unités de dérivation UD1 et UD2.

Les échanges en sens inverse, de A vers D, peuvent être assurés par le fait que la fibre F1 est interconnectée dans l'unité de dérivation UD2 à un tronçon de fibre SF1. Celui-ci communique par des répéteurs-échangeurs RE3 et RE4 avec la fibre F3.

L'information générale de rythme issue de la station A est communiquée à la station C par la fibre F1. Elle est communiquée à la station D par le répéteur-synchroniseur RS ainsi que la fibre F3. Et la station A la communique à son tour à la station B par la fibre F4.

En pratique, si les relations AD représentent n canaux au débit de base d, on insérera 2n répéteurs-échangeurs à un dispositif d'échange, selon le schéma de la figure 20. Outre les liaisons de base entre A et C d'une part, B et D d'autre part, le montage de la figure 20 permet des relations AD dans les deux sens. On obtiendra aisément des relations du type AB, BC et CD en multipliant le schéma, comme illustré sur la figure 21. Il suffit à chaque fois de deux tronçons de fibre, par exemple SF3A et SF4A qui partent des fibres F3 et F4 pour cotoyer la fibre F2 en direction de la station A. Pour aider à la compréhension du schéma de la figure 21 et des suivantes, les répéteurs-échangeurs sont désignés maintenant par la lettre RE suivie, après un tiret, de la ou des liaisons qu'ils permettent, dans l'ordre station de départ, station arrivée, et avec le symbole & s'il y a plusieurs liaisons assurées. Un seul répéteur-échangeur pour chaque liaison sera représenté. En fait, il en faudra pour chaque liaison un nombre dépendant du nombre de segments du signal à échanger.

Bien entendu, il importe de faire l'opération de duplication d'une fibre sur un segment de fibre en amont des opérations d'échange requises.

Plus généralement, chaque fois que des fibres entre lesquelles des échanges doivent avoir lieu ne se trouvent pas cohabiter sur une longueur suffisante pour permettre d'insérer le nombre voulu de répéteurs-échangeurs, il convient d'ajouter dans le câble une fibre ou un tronçon de fibre supplémentaire parallèle à la fibre sur laquelle le transfert doit se faire, et transportant un signal dupliqué. La longueur du tronçon de fibre doit être suffisante pour permettre d'insérer le nombre complémentaire de répéteurs-échangeurs requis. Ce nombre est égal à celui des signaux à échanger, car l'échange n'est utile que dans le sens de la fibre supplémentaire vers la fibre principale cohabitant avec elle.

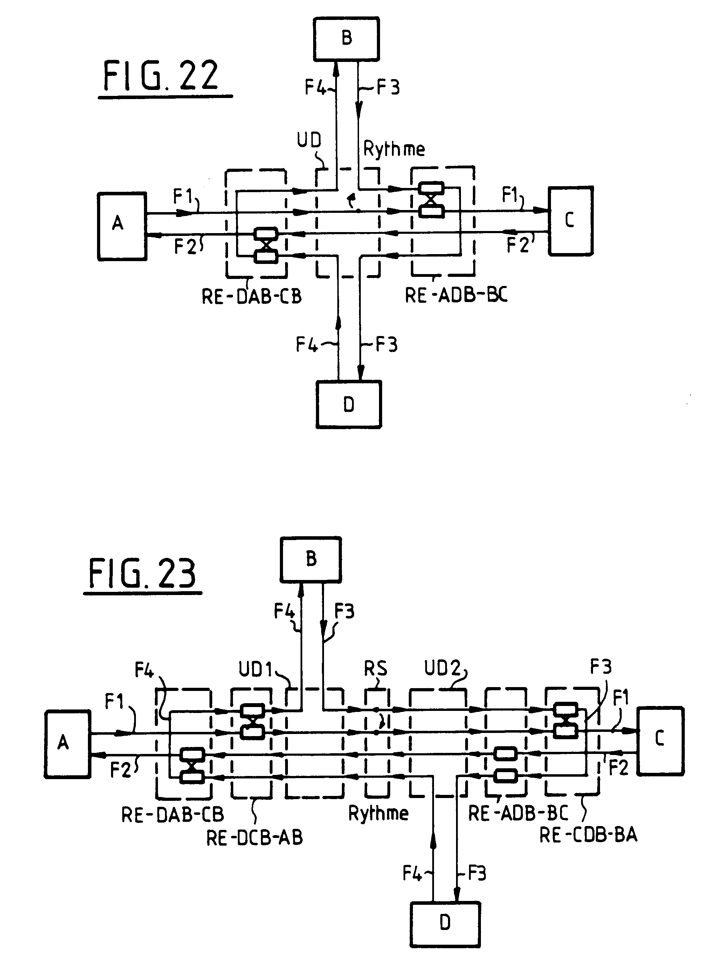

Une autre solution consiste à rajouter une boucle sur certaines des fibres. Ces fibres bouclées suivent alors sur une distance choisie à partir de l'unité de dérivation les fibres avec lesquelles l'échange doit se faire, avant de repartir vers l'unité de dérivation pour retrouver le câble de leur destination définitive. Cela est illustré en son principe sur la figure 22. On observe en effet que la fibre F3 va cotoyer la fibre F1 sur un certain nombre de répéteurs RE-AD & BC, avant de rejoindre l'unité de dérivation centrale UD pour aller de là vers la station D. De même, la fibre F4 partant de D va, après avoir rejoint l'unité de dérivation centrale UD, traverser un certain nombre de répéteurs RE-DA & CB, avant de rejoindre l'unité de dérivation UD pour aller vers sa destination finale qui est la station B.

Sur la figure 23, le montage est étendu pour permettre tous les échanges possible entre les quatre stations concernées. L'unité de dérivation centrale UD est maintenant dédoublée en deux unités UD1 et UD2 séparées par un répéteur-synchroniseur RS. De part et d'autre des deux unités de dérivation sont prévus non seulement des répéteurs du type RE-DA & CB, ainsi que RE-AD & BC, mais aussi des répéteurs-échangeurs du type RE-DC & AB, ainsi que des répéteurs-échangeurs du type RE-CD & BA.

Cette solution présente l'avantage d'assurer le secret d'information puisqu'aucune station ne recevra un signal qui ne lui est pas destiné. D'autre part, elle peut demander parfois une longueur plus importante pour la fibre supplémentaire bouclée. En contrepartie, on évite la duplication dans l'unité de dérivation. Et, comme la plupart des répéteurs-échangeurs échangeront deux signaux, ceci permet d'approcher le nombre optimal de répéteurs-échangeurs, dont le principe de calcul a été donné plus haut.

A titre incident, on remarquera que le rôle des fibres supplémentaires nécessaires pour permettre d'insérer le nombre voulu de répéteurs-échangeurs peut être également fourni par des fibres supplémentaires prévues par sécurité à des fins de redondance, ou encore par des paires de fibres partiellement occupées dans certaines sections de câbles.

En ce qui concerne les fibres de redondance, celles-ci cesseraient naturellement d'assurer la fonction d'échange lorsqu'elles joueraient leur rôle de sécurité. On rétablirait alors les chemins parallèles directs dans les répéteurs-échangeurs concernant ces fibres de redondance, ce qui peut être acceptable à titre momentané pour certaines installations.

Un réseau quelconque, devant acheminer un trafic prédéterminé entre un certain nombre de stations, peut être réalisé en combinant de façon adéquate les montages présentés ci-dessus.

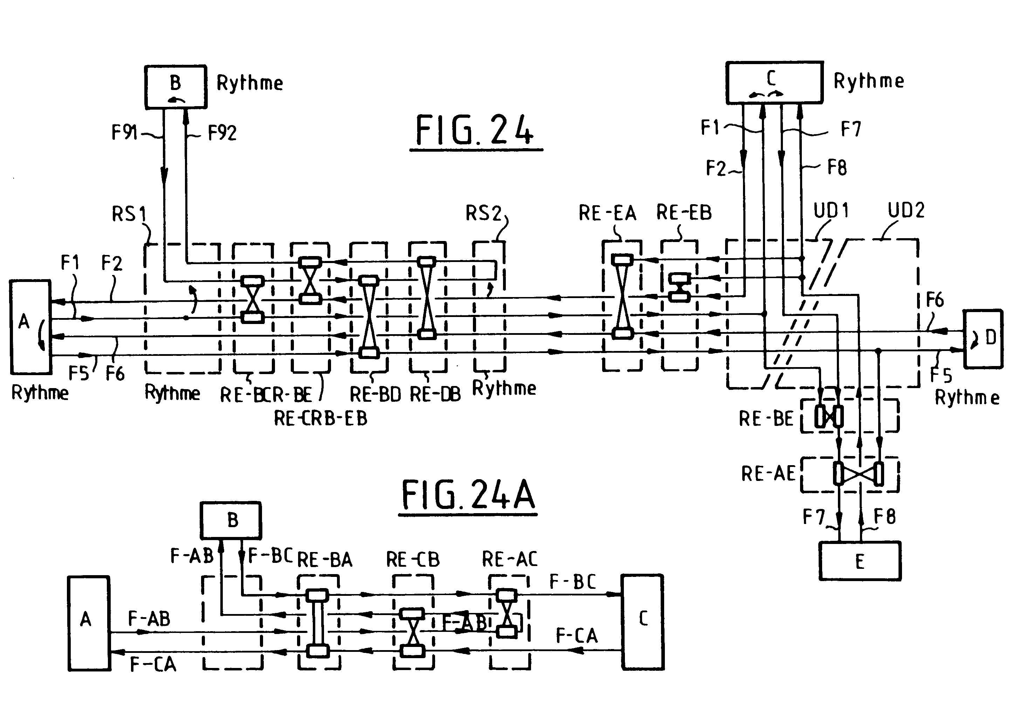

La figure 24 en représente un exemple. La station A communique par les fibres F1 et F2 avec la station C, à laquelle elle indique le rythme d'horloge. La station A communique également par les fibres F5 et F6 avec la station D à laquelle elle donne également l'horloge. La station C communique par les fibres F7 et F8 avec la station E à laquelle elle donne par là l'horloge. La station B opère sur une fibre F91, F92 en boucle fermée, et communique par des répéteurs-échangeurs avec les fibres F1, F2, F5 et F6. Sont également prévus pour elle deux répéteurs-synchroniseurs RS1 et RS2.

Les stations C, D et E s'articulent autour de deux unités de dérivation voisines UD1 et UD2. Des recopies convenables sur tronçons de fibre sont effectuées pour permettre les échanges dans les deux sens entre les fibres F7 et F8 et d'une part les fibres F2 et F6, d'autre part les fibres F1 et F5.

Une observation attentive du dessin montre que le signal de rythme circule à travers l'ensemble des fibres.

Le montage de la figure 24 utilise les enseignements décrits à propos des figures 15 à 23. Il peut être optimisé en utilisant soit les fibres en redondance, soit des paires de fibres partiellement utilisées dans certaines sections de câbles, comme indiqué plus haut.

Enfin, un exemple particulièrement simple de réseau assurant toutes les interconnexions entre trois stations est représenté sur la figure 24A. Les interconnexions AB, BC, CA sont réalisées directement par les fibres F-AB, F-BC et F-CA. La fibre F-AB coexiste grâce à une boucle avec les fibres F-BC et F-CA, ce qui permet d'assurer les interconnexions BA, CB et AC à l'aide des répéteurs-échangeurs RE-BA, RE-CB et RE-AC. La synchronisation du réseau est assurée depuis une horloge mère située dans l'une quelconque des stations grâce à la boucle de fibre F-AB, F-BC, F-CA.

On reviendra maintenant sur la mise en redondance des répéteurs-échangeurs eux-mêmes.

On a déjà examiné, en référence à la figure 11, le comportement de deux répéteurs-échangeurs mis en cascade, ou plus exactement de deux dispositifs échangeurs mis en cascade à l'intérieur d'un même répéteur-échangeur, et munis de trajets directs en parallèle.

Le schéma de la figure 25A montre que l'on peut tout aussi bien mettre en cascade deux répéteurs-échangeurs munis de leurs amplificateurs d'émission et de réception respectifs (non représentés ici). La figure 25A concerne le cas où les deux fibres FA, FC d'une part, FB, FD d'autre part sont de même sens.

Il est rappelé que, dans les conditions normales, si la synchronisation se fait de façon interne sur le signal, dés que le répéteur échangeur amont RE51 se sera synchronisé, le ou les répéteurs-échangeurs suivants RE52 ne trouveront plus le signal sur lequel ils doivent se synchroniser, et deviendront par conséquent transparents aux signaux à échanger. Mais on peut aussi assurer par télécommande la transmission par les chemins parallèles directs, pour tous les répéteurs-échangeurs que l'on veut utiliser en simples répéteurs.

Si l'on se tourne maintenant vers la figure 25B, il apparaît que les choses se passent de même pour des répéteurs-échangeurs RE53 et RE54 montés en parallèle entre des fibres de direction opposée, FA-FC d'une part et FB-FD d'autre part. Dans ce cas, si l'on utilise une synchronisation interne comme décrit à propos de la figure 8, c'est celui des deux répéteurs-échangeurs RE53 et RE54 qui se synchronisera le premier qui va par la suite rester en fonctionnement.

Par contre, si les synchronisations sont indépendantes, comme décrit à propos de la figure 2, il est à craindre que le système se bloque dans une situation où il serait rebouclé sur lui-même. Cela peut d'ailleurs également se produire en cas de défaut du système de synchronisation dans l'hypothèse examinée ci-dessus.

Lorsque les fibres sont de direction opposée, il est donc estimé préférable, à l'heure actuelle, de choisir celui des deux répéteurs-échangeurs qui sera en fonctionnement en assurant par télécommande la mise en service des chemins parallèles directs dans les autres répéteurs échangeurs qui agissent sur les mêmes signaux.

Rétrospectivement, ceci explique pourquoi des chemins parallèles ont été prévus dans le schéma de la figure 11, où deux modules d'échange ont été mis en cascade dans un même répéteur-échangeur.

La figure 26 reprend un schéma comparable à celui de la figure 11, mais avec deux fibres opérant en sens inverse, et une possibilité d'isolation de chacun des deux couples de répéteurs-échangeurs, référencés ici EI61 et EI62 d'une part, EI63 etEI64 d'autre part. Les organes SS611, SS612, SS621, SS622, SS631, SS632, SS641, SS642 sont des commutateurs de sécurité recevant un signal de télécommande TC du circuit de télécommande TCC. Ici, celui-ci est supposé acquérir ses informations de la partie de fibre venant de la station A à travers le récepteur d'amplification RA.

Il sera souvent utile de combiner la redondance entre paires de fibres et la redondance entre répéteurs-échangeurs. Cette situation a déjà été envisagée à propos de la figure 13. Les répéteurs-échangeurs redondants, et équipés de matrices de "reroutage et bouclage" peuvent être alors de l'un des types de répéteurs-échangeurs redondants décrits jusqu'à présent.

Dans le cours de la présente description, il a été indiqué comment synchroniser différentes sections d'un réseau, en utilisant des répéteurs-synchroniseurs (ou des unités de dérivation à transfert d'horloge) qui permettent de faire circuler l'information d'horloge sur l'ensemble du réseau.

Cependant, ces répéteurs-synchroniseurs peuvent être utilisés dans un autre but.

Il a été vu plus haut, notamment en référence à la figure 2, que les dispositifs d'échange (les paires de commutateurs d'extraction-insertion) des répéteurs-échangeurs comportent des mémoires-tampon permettant de stocker le message à insérer jusqu'à ce qu'il puisse occuper l'emplacement libéré par le message extrait.

Le but de cela est double : compenser la différence quant à l'emplacement des deux signaux, dans le signal résultant au débit d. Mais le but est aussi de compenser les variations de la différence de temps de propagation des signaux jusqu'à l'unité de dérivation.

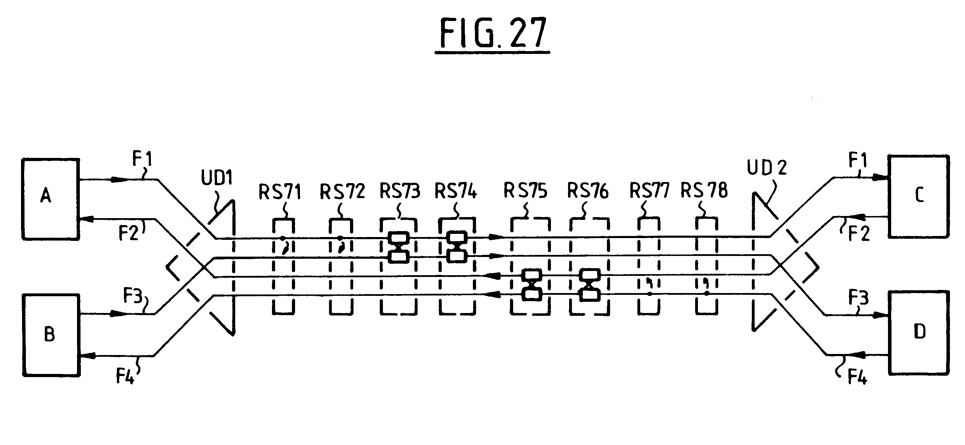

Ce dernier rôle peut également être accompli au moins partiellement par des répéteurs-synchroniseurs placés en amont des dispositifs d'échange, comme illustré sur la figure 27.

Cette figure concerne quatre fibres optiques F1 et F2 entre les stations A et C, ainsi que F3 et F4 entre les stations B et D. Il est prévu une unité de dérivation UD1 à l'Ouest et une autre UD2 à l'Est. Les répéteurs-échangeurs proprement dits tels que RE73 et RE74 d'une part, RE75 et RE76 d'autre part, sont encadrés par des répéteurs-synchroniseurs RS71 et RS72 à l'Ouest, RS-77 et RS-78 à l'Est.

Ceci permet, en réduisant la taille de la mémoire-tampon nécessaire, d'alléger la réalisation des répéteurs-échangeurs. Ceci permet aussi, pour une taille donnée, de limiter les risques de saturation des mémoires-tampon, et par conséquent d'améliorer les performances de transmission de la liaison.

La situation et le nombre des répéteurs-synchroniseurs de la figure 27 ne sont donnés qu'à titre d'exemple. Ils seront en fait adaptés aux besoins.

## Revendications

1. Dispositif de transmission par câble à fibres optiques, en particulier en milieu sous-marin, comprenant au moins un module d'échange ou encore une paire de commutateurs d'extraction-insertion (EI), constituant un organe électrique de transfert de données entre fibres, et propre à extraire de la trame du signal utile les segments (Se) relatifs à un premier groupe de signaux affluents, pour les remplacer par des segments (Ei) relatifs à un second groupe de signaux affluents, caractérisé en ce qu'il comporte des modules répéteurs-échangeurs (RE) comprenant chacun au moins un module d'échange, tel qu'une paire de commutateurs d'extraction-insertion (EI1, EI2) associés à des moyens de synchronisation (SD), propre à effectuer un échange de segments de trame entre au moins deux fibres choisies dudit câble, ainsi que des moyens régénérateurs pour l'ensemble des fibres de ce câble et pour assurer d'autres fonctions courantes du répéteur, le tout enfermé dans un boîtier analogue à celui d'un répéteur, ce qui permet de répartir la fonction de "multiplexage immergé" ou encore d'orientation du trafic sur un groupe de tels répéteurs-échangeurs.

2. Dispositif selon la revendication 1, caractérisé en ce que deux fibres sujettes à échange dans un module répéteur-échangeur sont de même sens.

3. Dispositif selon l'une des revendications 1 et 2, caractérisé en ce que deux fibres sujettes à échange dans un module répéteur-échangeur sont de sens différent.

4. Dispositif selon l'une des revendications 1 à 3, caractérisé en ce qu'un module d'échange (EI1, EI2) est au repos tant que sa synchronisation n'a pu être établie.

5. Dispositif selon l'une des revendications 1 à 4, caractérisé en ce qu'un module d'échange (EI1, EI2) est court-circuitable sur commande par des chemins parallèles directs (DP1, DP2).

6. Dispositif selon l'une des revendications 1 à 5, caractérisé en ce qu'un autre module d'échange (EI12, EI22) est monté, commutable, en redondance sur le module d'échange (EI11, EI21), pour les mêmes fibres.

7. Dispositif selon l'une des revendications 1 à 6, dans lequel un module répéteur-échangeur, équipé d'au moins une paire de fibres redondantes, est agencé pour permettre un déroutage des signaux transitant sur certaines au moins des autres fibres par lesdites fibres redondantes, en particulier à l'aide d'une matrice de déroutage (MCR), caractérisé en ce que les entrées-sorties de l'un au moins des modules d'échange (EI1, EI2) sont commutables sur une fibre redondante de même sens.

8. Dispositif selon l'une des revendications 1 à 7, caractérisé en ce qu'un module d'échange (EI10, EI20) opère sur des segments de données relatifs à un débit de transmission intermédiaire entre le haut débit et le débit de base des affluents numériques.

9. Dispositif selon la revendication 8, caractérisé en ce qu'un module d'échange (EI10, EI20) opérant à débit intermédiaire est doublé par un autre module d'échange (EI11, EI21) opérant au débit de base.

10. Dispositif selon l'une des revendications 1 à 9, caractérisé en ce qu'il comporte, au voisinage d'une unité de dérivation d'atterrissage (UDO) côté mer, un tronçon de fibre (SF3) et une fibre (F1) respectivement reliées par l'unité de dérivation à deux stations terrestres différentes, ainsi qu'au moins un module répéteur-échangeur (RE41, RE42) monté entre le tronçon de fibre (SF3) et la fibre (F1).

11. Dispositif selon l'une des revendications 1 à 10, caractérisé en ce qu'il comprend au moins une unité de dérivation (UD) propre à dupliquer le signal incident vers deux stations différentes, qui reçoivent alors toutes deux la même fréquence d'horloge.

12. Dispositif selon la revendication 11, caractérisé en ce qu'il est prévu, au voisinage de l'unité de dérivation, au moins un module répéteur-échangeur (RE23), pour extraire les messages ne concernant pas la station de destination, et les remplacer par un pur signal de rythme.

13. Dispositif selon l'une des revendications 1 à 10, caractérisé en ce que le signal (F41) provenant d'une station est, après stockage, renvoyé à cette station (F42) à une fréquence d'horloge tirée d'une autre station.

14. Dispositif selon la revendication 13, caractérisé en ce que le renvoi à la même station est effectué après passage dans des modules répéteurs-échangeurs (RE81-RE84) qui assurent des échanges de messages avec deux autres stations.

15. Dispositif selon l'une des revendications 1 à 10, caractérisé en ce qu'une fibre traversant une unité de dérivation est prolongée par une boucle de fibre constituant un aller et retour au départ de cette unité de dérivation, de façon à coexister avec d'autres fibres.

16. Dispositif selon la revendication 15, caractérisé en ce que la boucle de fibre traverse un ou des modules répéteurs-échangeurs qui assurent des échanges de message entre la boucle et d'autres fibres.

17. Dispositif selon l'une des revendications précédentes, caractérisé en ce que certains au moins des répéteurs-échangeurs sont synchronisés sur l'un de leurs signaux incidents.

18. Dispositif selon l'une des revendications précédentes, caractérisé en ce que certains au moins des répéteurs-échangeurs sont synchronisés par télécommande.

19. Dispositif selon l'une des revendications précédentes, caractérisé en ce qu'il comporte au moins un répéteur-synchroniseur agencé pour compenser au moins en partie les délais dus au temps de propagation des signaux.

**Patentansprüche**

1. Vorrichtung zur Übertragung über optische Faserkabel insbesondere unter Wasser, enthaltend wenigstens ein Austauschmodul oder noch ein Paar Auslese-Einlese-Schalter EI, der ein elektrisches Datenübertragungsorgan zwischen Fasern bildet und dazu eingerichtet ist, aus dem Nutzsignalraster die Segmente (Se) zu extrahieren, die sich auf eine erste Gruppe zuströmender Signale beziehen, um sie durch Segmente (Ei) zu ersetzen, die sich auf eine zweite Gruppe zuströmender Signale beziehen, **dadurch gekennzeichnet**, daß sie Relais-Austauscher-Module (RE) enthält, die jeweils wenigstens ein Austauschmodul enthalten, wie beispielsweise ein Paar Auslese-Einlese-Schalter (EI1, EI2), die Synchronisiereinrichtungen (SD) zugeordnet sind, die dazu eingerichtet sind, einen Austausch von Rasterelementen zwischen wenigstens zwei ausgewählten Fasern des Kabels auszuführen, sowie Regeneriereinrichtungen für alle Fasern des Kabels und zum Sicherstellen weiterer laufender Funktionen des Relais, wobei alles in einem Behälter analog zu dem eines Relais eingeschlossen ist, was es erlaubt, die Funktion der "untergetauchten Multiplexierung" oder noch die Ausrichtung des Verkehrs auf eine Gruppe solcher Relais-Austauscher aufzuteilen.

2. Vorrichtung nach Anspruch 1, **dadurch gekennzeichnet**, daß zwei Fasern, die einem Austausch in einem Relais-Austauscher-Modul unterworfen sind, von gleicher Richtung sind.

3. Vorrichtung nach einem der Ansprüche 1 und 2, **dadurch gekennzeichnet**, daß zwei Fasern, die einem Austausch in einem Relais-Austauscher-Modul unterworfen sind, von unterschiedlicher Richtung sind.

4. Vorrichtung nach einem der Ansprüche 1 bis 3, **dadurch gekennzeichnet,** daß ein Austauschmodul (EI1, EI2) sich in Ruhe befindet solange wie seine Synchronisierung nicht eingerichtet werden konnte.

5. Vorrichtung nach einem der Ansprüche 1 bis 4, **dadurch gekennzeichnet**, daß ein Austauschmodul (EI1, EI2) auf Befehl durch parallele Gleichkanäle (DP1, DP2) kurzgeschlossen ist.

6. Vorrichtung nach einem der Ansprüche 1 bis 5, **dadurch gekennzeichnet**, daß ein weiteres Austauschmodul (EI12, EI22) umschaltbar in Redundanz über das Austauschmodul (EI11, EI21) für dieselben Fasern geschaltet ist.

7. Vorrichtung nach einem der Ansprüche 1 bis 6, bei der ein Relais-Austauschermodul, das mit wenigstens einem Paar redundanten Fasern ausgerüstet ist, derart angeordnet ist, daß eine Umleitung von Signalen durch die genannten redundanten Fasern ermöglicht wird, die über wenigstens einige der anderen Fasern laufen, insbesondere mit Hilfe einer Umleitungsmatrix (MCR), **dadurch gekennzeichnet**, daß die Eingänge-Ausgänge von wenigstens einem der Austauschmodule (EI1, EI2) auf eine redundante Faser gleicher Richtung umschaltbar sind.

8. Vorrichtung nach einem der Ansprüche 1 bis 7, **dadurch gekennzeichnet**, daß ein Austauschmodul (EI10, EI20) auf Datensegmente arbeitet, die sich auf eine Übertragungsleistung zwischen der hohen Leistung und der Basisleistung der digitalen Zuströmungen beziehen.

9. Vorrichtung nach Anspruch 8, **dadurch gekennzeichnet**, daß ein Austauschmodul (EI10, EI20), das mit einer Zwischenleistung arbeitet, durch ein weiteres Austauschmodul (EI11, EI12) verdoppelt ist, das mit der Basisleistung arbeitet.

10. Vorrichtung nach einem der Ansprüche 1 bis 9, **dadurch gekennzeichnet**, daß sie benachbart einer Erdungsableiteinheit (UDO) auf Seiten des Meeres einen Faserabschnitt (SF3) und eine Faser (F1) aufweist, die jeweils über eine Ableiteinheit mit zwei verschiedenen Landstationen verbunden sind, sowie wenigstens ein Relais-Austauscher-Modul (RE41, RE42), das zwischen dem Faserabschnitt (SF3) und der Faser (F1) angeordnet ist.

11. Vorrichtung nach einem der Ansprüche 1 bis 10, **dadurch gekennzeichnet**, daß sie wenigstens eine Ableiteinheit (UD) enthält, die dazu geeignet ist, das in die zwei verschiedenen Stationen einfallende Signal zu duplizieren, die somit beide die gleiche Taktfrequenz erhalten.

12. Vorrichtung nach Anspruch 11, **dadurch gekennzeichnet**, daß benachbart der Ableiteinheit wenigstens ein Relais-Austauscher-Modul (RE23) vorgesehen ist, um die Sendungen zu extrahieren, die die Zielstation nicht betreffen, und um sie durch ein reines Taktsignal zu ersetzen.

13. Vorrichtung nach einem der Ansprüche 1 bis 10, **dadurch gekennzeichnet**, daß das Signal (F41), das von einer Station stammt, nach Speicherung an diese Station (F42) mit einer Taktfrequenz rückgesandt wird, die von einer anderen Station bezogen ist.

14. Vorrichtung nach Anspruch 13, **dadurch gekennzeichnet,** daß die Zurücksendung an dieselbe Station nach Durchlauf durch Relais-Austauscher-Module (RE81-RE84) ausgeführt wird, was einen Austausch von Sendungen mit zweit weiteren Stationen bewirkt.

15. Vorrichtung nach einem der Ansprüche 1 bis 10, **dadurch gekennzeichnet**, daß eine Faser, die eine Ableiteinheit durchquert, durch eine Faserschleife verlängert ist, die einen Hin- und Rücklauf zum Ausgang dieser Ableiteinheit bildet, um mit weiteren Fasern zu koexistieren.

16. Vorrichtung nach Anspruch 15, **dadurch gekennzeichnet**, daß die Faserschleife einen oder mehrere Relais-Austauscher-Module durchquert, die einen Austausch von Sendungen zwischen der Schleife und weiteren Fasern bewirken.

17. Vorrichtung nach einem der vorhergehenden Ansprüche, **dadurch gekennzeichnet**, daß wenigstens einige der Relais-Austauscher auf eines ihrer einfallenden Signale synchronisiert sind.

18. Vorrichtung nach einem der vorhergehenden Ansprüche, **dadurch gekennzeichnet**, daß wenigstens einige der Relais-Austauscher durch Fernsteuerung synchronisert sind.

19. Vorrichtung nach einem der vorhergehenden Ansprüche, **dadurch gekennzeichnet**, daß sie wenigstens einen Relais-Synchronisierer enthält, der dazu vorgesehen ist, wenigstens zum Teil die Verzögerungen zu kompensieren, die aus der Signallaufzeit resultieren.

## Claims

1. Device for transmission by fibre optic cable, in particular in an underwater environment, comprising at least one interchange module or again a pair of extract/insert switches (EI), constituting an electrical element for transferring data between fibres, and able to extract from the frame of the useful signal the segments (Se) relating to a first group of tributary signals, in order to replace them by segments (Ei) relating to a second group of tributary signals, characterised in that it comprises repeater/interchanger modules (RE) each including at least one interchange module, such as a pair of extract/insert switches (EI1, EI2), associated with synchronising means (SD), which is able to effect an interchange of frame segments between at least two chosen fibres from the said cable, as well as regenerative means for all the fibres of this cable and for ensuring other current functions of the repeater, the whole enclosed in a box similar to that of a repeater, this enabling the function of "submerged multiplexing" or again of directing the traffic to be distributed over a group of such repeaters/interchangers.

2. Device according to Claim 1, characterised in that two interchange-prone fibres in a repeater/interchanger module are similarly directed.

3. Device according to either of Claims 1 and 2, characterised in that two interchanger-prone fibres in a repeater/interchanger module are oppositely directed.

4. Device according to one of Claims 1 to 3, characterised in that an interchange module (EI1, EI2) is passive as long as its synchronisation has not been established.

5. Device according to one of Claims 1 to 4, characterised in that an interchange module (EI1, EI2) can be short-circuited on command by direct parallel routes (DP1, DP2).

6. Device according to one of Claims 1 to 5, characterised in that another interchange module (EI12, EI22) is mounted, switchably, redundantly on the interchange module (EI11, EI21), for the same fibres.

7. Device according to one of Claims 1 to 6, in which a repeater/interchanger module, equipped with at least one pair of redundant fibres, is configured to enable re-routing of the signals travelling over at least certain of the other fibres by the said redundant fibres, in particular with the aid of a re-routing matrix (MCR), characterised in that the inputs/outputs of one at least of the interchange modules (EI1, EI2) can be switched onto a similarly directed redundant fibre.

8. Device according to one of Claims 1 to 7, characterised in chat an interchange module (EI10, EI20) operates on data segments relating to a transmission throughput intermediate between the high throughput and the basic throughput for the digital tributaries.

9. Device according to Claim 8, characterised in that an interchange module (EI10, EI20) operating at intermediate throughput is backed up by another interchange module (EI11, EI21) operating at the basic throughput.

10. Device according to one of Claims 1 to 9, characterised in that it comprises, in the vicinity of a sea side landing drop unit (UDO) a section of fibre (SF3) and a fibre (F1) connected respectively by the drop unit to two different land stations, as well as at least one repeater/interchanger module (RE41, RE42) mounted between the section of fibre (SF3) and the fibre (F1).

11. Device according to one of Claims 1 to 10, characterised in that it includes at least one drop unit (UD) able to duplicate the incoming signal to two different stations, which then both receive the same clock frequency.

12. Device according to Claim 11, characterised in that, in the vicinity of the drop unit, there is provided at least one repeater/interchanger module (RE23) for extracting the messages which do not relate to the destination station, and replacing them with a pure timing signal.

13. Device according to one of Claims 1 to 10, characterised in that the signal (F41) coming from a station is, after storage, returned to this station (F42) at a clock frequency drawn from another station.

14. Device according to Claim 13, characterised in that the return to the same station is effected after passing through repeater/interchanger modules (RE81-RE84) which ensure interchanges of messages with two other stations.

15. Device according to one of Claims 1 to 10, characterised in that a fibre crossing a drop unit is extended by a fibre loop constituting a turnaround at the start of this drop unit, so as to coexist with other fibres.

16. Device according to Claim 15, characterised in that the fibre loop crosses one or more repeater/interchanger modules which ensure message interchanges between the loop and other fibres.

17. Device according to one of the preceding claims, characterised in that certain at least of the repeaters/interchangers are synchronised on one of their incoming signals.

18. Device according to one of the preceding claims, characterised in that certain at least of the repeaters/interchangers are synchronised by remote control.

19. Device according to one of the preceding claims, characterised in that it comprises at least one repeater/ synchroniser configured in order to compensate at least in part the delays due to the propagation time of the signals.

## FIG.1

DISPOSITIF DE SYNCHRONISATION

STOCKAGE INTERMEDIAI-

EI

Syt

SD

Syt

El (débit D)

Sl (débit D)

ES

IS

MI

Se

Ei

## FIG.1A

EI

Ei

E / I

Sl

Se  Ei

## FIG.3A

RE

D

EI10

EI1

E / I

Sl1

d'

EI 2

E / I

Sl2

D

EI 20

## FIG.3B

RE

D

EI 10

El1

E / I

Sl 1

d'

E / I

EI 11

d

EI 21

E / I

d'

EI2

E / I

Sl2

D

EI 20

FIG. 2

FIG. 2A

FIG. 2B

FIG.4

FIG.5

## FIG. 6

## FIG. 7

## FIG.8

## FIG.9

## FIG. 10

## FIG.11

## FIG. 12

RR1    RS2

RA    F1    UDO

A

0
(Ouest)

RB    F3

B    F4

RE3    RE4    RE5    RE6

F2

F1    C

F2    UDE

E
(Est)

F3    D

F4

## FIG. 13

A

0

B

UDMO    REM1    REM2    UDME

C

E

D

EP 0 287 415 B1

FIG. 14A

FIG. 14B

FIG. 15

FIG. 15A

FIG. 16A

FIG. 16B

FIG.17

FIG.17A

FIG.18

FIG.19A

FIG.19B

## FIG. 20

LEGENDE

⊠ Répéteur-échangeur

Duplication dans
unité de dérivation

## FIG. 21

# FIG. 22

RE-DAB-CB   RE-ADB-BC

# FIG. 23

RE-DAB-CB   RE-ADB-BC
RE-DCB-AB   RE-CDB-BA

Rythme

FIG. 24

FIG. 24A

FIG.25A

FIG.25B

FIG.26

FIG.27

EP 0 287 415 B1